(19) Europäisches Patentamt
European Patent Office
Office européen des brevets

(11) EP 2 239 625 A1

(12) EUROPEAN PATENT APPLICATION
published in accordance with Art. 153(4) EPC

(43) Date of publication:
**13.10.2010 Bulletin 2010/41**

(21) Application number: **08872220.2**

(22) Date of filing: **30.10.2008**

(51) Int Cl.:
***G02F 1/13363*** *(2006.01)* ***G02B 5/30*** *(2006.01)*
***G02F 1/1335*** *(2006.01)*

(86) International application number:
**PCT/JP2008/069789**

(87) International publication number:
**WO 2009/098804 (13.08.2009 Gazette 2009/33)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **07.02.2008 JP 2008027998**

(71) Applicant: **Sharp Kabushiki Kaisha
Osaka-shi, Osaka 545-8522 (JP)**

(72) Inventor: **SAKAI, Akira
Osaka-shi, Osaka 545-8522 (JP)**

(74) Representative: **Müller - Hoffmann & Partner
Patentanwälte
Innere Wiener Strasse 17
81667 München (DE)**

# (54) METHOD FOR MANUFACTURING LIQUID CRYSTAL DISPLAY, AND LIQUID CRYSTAL DISPLAY

(57) The present invention provides a method for easily producing at low cost a liquid crystal display device which can achieve a higher contrast ratio in a wide viewing angle range, and a liquid crystal display device. The present invention relates to a method for producing a liquid crystal display device including a first polarizer, a first birefringent layer, a liquid crystal cell, a second birefringent layer, and a second polarizer in this order. The production method comprises at least one of the following first and second steps. The first step includes: laterally stretching a raw film for the first birefringent layer including a material with positive intrinsic birefringence to produce the first birefringent layer; and bonding the first polarizer and the first birefringent layer by roll-to-roll processing. The second step includes: laterally stretching a raw film for the second birefringent layer including a material with negative intrinsic birefringence to produce the second birefringent layer; and bonding the second polarizer and the second birefringent layer by roll-to-roll processing.

Fig. 2

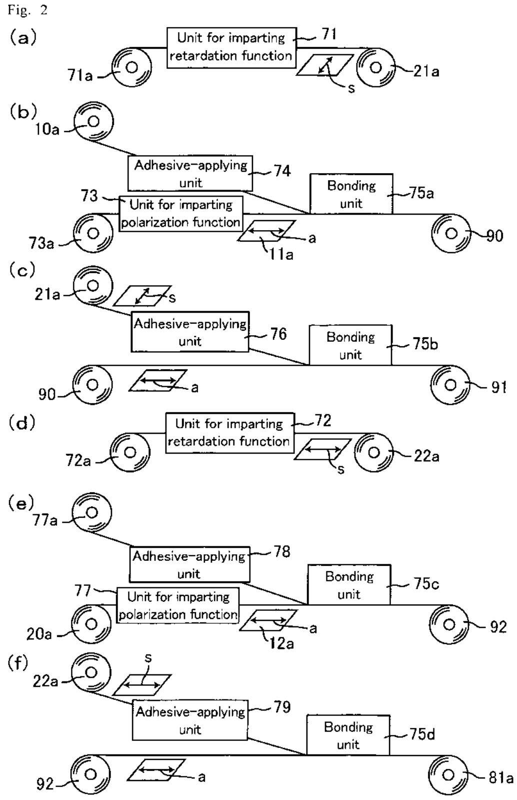


EP 2 239 625 A1

## Description

TECHNICAL FIELD

The present invention relates to a method for producing a liquid crystal display device, and a liquid crystal display device. The present invention more specifically relates to a method for producing a liquid crystal display device having a birefringent layer between two polarizers disposed in a crossed Nicols state, and the liquid crystal display device.

BACKGROUND ART

Liquid crystal display devices are widely used as display devices for various data-processing devices such as computers and televisions. In particular, TFT liquid crystal display devices (hereinafter, also referred to as "TFT-LCDs") become popular, and expansion of the TFT-LCD market is expected. Such a situation creates a demand for much improved image quality.

Although the present description employs the TFT-LCDs as an example, the present invention may be applicable to passive matrix LCDs, plasma address LCDs, and the like in addition to the TFT-LCDs. Generally, the present invention is applicable to an LCD which contains a liquid crystal between two substrates each provided with an electrode and which displays an image when a voltage is applied between the electrodes.

The most widely used mode in the TFT-LCDs currently is a mode in which a liquid crystal having positive dielectric anisotropy is horizontally aligned between parallel substrates, namely, the TN mode. In a TN liquid crystal display device, the alignment direction of liquid crystal molecules adjacent to one substrate is twisted by 90° to that of liquid crystal molecules adjacent to the other substrate. Such TN liquid crystal display devices are now produced at low cost and have been industrially mature, while they are less likely to achieve a higher contrast ratio. The TN liquid crystal display device may be improved in this respect.

In addition, there are disclosed liquid crystal display devices having another mode in which a liquid crystal having negative dielectric anisotropy is aligned perpendicular to parallel substrates, namely the VA liquid crystal display devices. In the VA liquid crystal display devices, liquid crystal molecules are aligned almost perpendicular to the surfaces of the substrates when no voltage is applied. Here, the liquid crystal cell hardly shows birefringence and optical rotation, and light passes through the liquid crystal cell while hardly changing in its polarization state. Thus, in the case of the arrangement such that the liquid crystal cell is interposed between two polarizers absorption axes of which are orthogonal to each other, it is possible to display an almost perfectly black screen when no voltage is applied. When a voltage is applied, the liquid crystal molecules are made to be almost parallel to the substrates, the liquid crystal cell shows large birefringence, and the liquid crystal display device displays a white screen. Thus, such a VA liquid crystal display device easily achieves a very high contrast ratio, which is not achieved by the TN liquid crystal display devices.

In contrast, the VA liquid crystal display device is less likely to have a wide viewing angle, and the VA liquid crystal display device may be improved in this respect. This is because as follows.

When no voltage is applied, as mentioned above, the VA liquid crystal display device displays an almost perfectly black screen because the liquid crystal cell hardly shows birefringence and the two polarizers are perfectly orthogonal in the front direction (the direction perpendicular to the display surface), but the liquid crystal cell shows birefringence in oblique directions and apparently has phase difference. Further, the two polarizers are apparently not geometrically orthogonal. Thus, light leakage occurs to cause reduction in the contrast ratio, resulting in a narrower viewing angle.

For the above reasons, VA liquid crystal display devices are provided with retardation films in many cases in order to remove excessive retardation of the liquid crystal cell in oblique directions and to maintain orthogonality of the polarizers in a crossed Nicols state in oblique directions. For example, there are disclosed techniques for widening a viewing angle wherein polarizers are disposed on both sides of the perpendicularly aligned liquid crystal cell, and the polarizer and the liquid crystal cell sandwich at least one of the following films: a uniaxial retardation film having an in-plane optic axis and satisfying the relationship of extraordinary index > ordinary index (a positive A plate); a uniaxial retardation film having an out-of-plane (film normal direction) optic axis and satisfying the relationship of extraordinary index < ordinary index (a negative C plate); and a biaxial retardation film (see Patent Documents 1 to 3).

In addition, there are also disclosed the following techniques in which multiple retardation films are used in combination: a technique with combination use of the positive A plate and the positive C plate (see Patent Document 4); a technique with combination use of the negative A plate and the negative C plate (see Patent Document 5); and a technique with combination use of a biaxial retardation plate having birefringence with an in-plane retardation of 250 to 300 nm and an Nz of 0.1 to 0.4 and a biaxial retardation plate having birefringence with an in-plane retardation of 250 to 300 nm and an Nz of 0.6 to 1.1 (see Patent Document 6).

In addition to the VA liquid crystal display devices, there is disclosed another liquid crystal display device wherein an electric field is transversely applied to a homogeneous liquid crystal cell in which a liquid crystal is interposed between two substrates each having the surface subjected to treatment for homogeneous alignment, and thereby liquid crystal molecules are rotated in a plane almost parallel to the substrates to achieve image display; such a device is called as the IPS liquid crystal display device. In the IPS liquid crystal display device, the liquid crystal molecules are always almost parallel to the substrates while the angles formed by the longitudinal directions of the liquid crystal molecules with the absorption axes of the polarizers are changed to display images. Thus, birefringence of the liquid crystal cell is less changed even in oblique directions, and the device is allowed to have a wide viewing angle.

In the IPS liquid crystal display devices, similar to the case of the VA liquid crystal display devices, two polarizers are disposed orthogonal (in a crossed Nicols state) so as to increase the contrast ratio. Here, the polarizers are apparently not geometrically orthogonal in oblique directions. This causes light leakage upon displaying a black screen, resulting in reduction in the contrast ratio. Thus, the IPS liquid crystal display device may be improved in this respect.

In order to prevent such reduction in the contrast ratio, the IPS liquid crystal display device is also provided with a retardation film. For example, there is disclosed a technique in which the polarizer and the liquid crystal cell sandwich an appropriate biaxial retardation film having an adjusted in-plane retardation and thickness-direction retardation (in-plane retardation is 190 to 390 nm, Nz = 0.3 to 0.65) (see Patent Document 7). There is also disclosed a technique in which multiple retardation films are used in combination, such as a technique in which a negative uniaxial A plate (optic axis 0°) and a positive uniaxial A plate (optic axis 90°) are placed between the viewing-side polarizer (absorption axis 90°) and the back-side polarizer (absorption axis 0°) (see Non-Patent Document 1).

Further, there are disclosed: a multilayer polarizing film comprising a positive almost uniaxial optical film (Nz(550) = 1), a negative optical film (Nz(550) = -0.3), and a polarizing film stacked in this order, wherein the slow axis of the positive almost uniaxial optical film and the slow axis of the negative optical film are almost parallel to the absorption axis of the polarizing film (hereinafter, referred to as a first multilayer polarizing film); and a multilayer polarizing film comprising a negative almost uniaxial optical film (Nz(550) = 0), a positive optical film (Nz(550) = 1.2 to 1.3), and a polarizing film stacked in this order, wherein the slow axis of the negative almost uniaxial optical film and the slow axis of the positive optical film are almost parallel to the absorption axis of the polarizing film (hereinafter, referred to as a second multilayer polarizing film) (see Patent Documents 8 and 9).

[Patent Document 1]
US 6,141,075
[Patent Document 2]
US 6.,661,488
[Patent Document 3]
US 7,057,689
[Patent Document 4]
WO 06/001448
[Patent Document 5]
Japanese Kohyo Publication 2006-514754
[Patent Document 6]
Japanese Kokai Publication 2001-350022
[Patent Document 7]
Japanese Kokai Publication H11-305217
[Patent Document 8]
Japanese Kokai Publication 2007-232873
[Patent Document 9]
Japanese Kokai Publication 2007-232874
[Non-Patent Document 1]
XiNzhu, et al., "Super Wide View In-plane Switching LCD with Positive and Negative Uniaxial A-Films Compensation", SID 05 DIGEST, p.1164-1167

DISCLOSURE OF THE INVENTION

In general, a polarizer is low in properties such as mechanical strength and moist heat resistance because it includes a polyvinyl alcohol (PVA) film with a dichroic anisotropic material such as an iodine complex adsorbed and aligned thereon. Thus, the polarizer is generally produced in a state such that the polarizer is disposed between protecting films such as triacetyl cellulose (TAC) films. Here, the protecting film such as the TAC film has excessive retardation (is a negative C plate having an out-of-plane retardation of about 30 to 80 nm). Thus, it is preferable not to use the protecting film if possible in order to increase accuracy of optical compensation and to reduce the cost.

In the inventions of Patent Documents 1 to 7 and Non-Patent Document 1, however, protecting films such as TAC films 10 are necessarily used even though it is recognized that birefringent layers (retardation films) are individually stacked on a polarizer as shown in Fig. 9. Thus, optical compensation is not achieved at high accuracy and the production of each invention costs high; the inventions may be improved in these respects. As shown in Fig. 10, use of protecting films 24 with small phase difference (referred to as "protecting films with zero phase difference", "no-alignment protecting films" or the like) as the protecting films is examined in order to increase accuracy of optical compensation. Here, the method for producing the zero-phase-difference protecting film 24 is complicated in general, and this promotes cost increase. Thus, the technique may be improved in this respect.

In contrast, the multilayer polarizing films of Patent Documents 8 and 9 contribute to a wider viewing angle of the IPS liquid crystal display device. In addition, they enable omission of some protecting films. This is because they enable bonding of a positive almost uniaxial optical film, a negative optical film, and a polarizing film (a polarizer) by roll-to-roll processing in the case of the first multilayer polarizing film, or bonding of a negative almost uniaxial optical film, a positive optical film, and a polarizing film (a polarizer) by roll-to-roll processing in the case of the second multilayer polarizing film. In the IPS liquid crystal display devices, it is required to dispose a positive optical film and a negative optical film on the same side of the liquid crystal cell in order to allow the liquid crystal cell not to optically work upon displaying a black screen. Thus, protecting films may not be used on the side where the positive and negative films are disposed, but the protecting films are essential on the other side; the inventions may be improved in this respect.

In the techniques of Patent Documents 4 to 6, each retardation layer (other than the positive C plate) requires a large retardation |Rxy(550)|. Thus, it is generally difficult to produce a retardation film with reverse wavelength dispersion (a wide-band retardation film); the inventions may be improved in this respect.

This is because the retardation film with reverse wavelength dispersion is substantially less likely to show retardation. According to the technique of Patent Document 4, production of the positive C plate requires special stretching so as to increase the refractive index in the thickness direction, and thus the positive C plate is generally difficult to produce; the invention may be improved in this respect.

According to the invention of Patent Document 7, materials are limited and the relationship of $nx > nz > ny$ is necessarily achieved so as to satisfy $Nz \approx 0.5$. In order to achieve $nx > nz > ny$, special stretching is required, and thus production of the invention is likely to be difficult; the invention may be improved in this respect.

In the invention of Non-Patent Document 1, conditions for retardation are optimized only at a single wavelength (generally, around 550 nm) although retardations |Rxy(550)| of the positive uniaxial A plate and the negative uniaxial A plate are reduced. Thus, light leakage occurs upon displaying a black screen at wavelengths other than the designated wavelength and coloration (coloring) occurs upon displaying a black screen in oblique directions.

The present invention is devised considering the aforementioned situations. An object of the present invention is to provide a method for easily producing at low cost a liquid crystal display device which achieves a higher contrast ratio in a wide viewing angle range, and the liquid crystal display device.

The present inventors have performed various studies on a method for easily producing at low cost a liquid crystal display device which achieves a higher contrast ratio in a wide viewing angle range. Thus, the present inventors have found that it is possible to reduce the number of protecting films and thereby to achieve production of a device having improved performance at low cost by the use of, as shown in Fig. 11, for example, a first birefringent layer 21 and a second birefringent layer 22 as protecting films for a first polarizer 11 and a second polarizer 12, respectively, that is, by the use Of a polarizing plate including the first birefringent layer 21, the first polarizer 11, and a TAC film (protecting film) 10 bonded in this order via an adhesive 5 and a polarizing plate including the second birefringent layer 22, the second polarizer 12, and a TAC film (protecting film) 10 bonded in this order via an adhesive 5, even in the case that the first or second polarizer has low mechanical strength and moist heat resistance.

The above structure is achieved by carrying out at least one of the following first and second steps. The first step includes: longitudinally stretching a raw film for the first polarizer to produce the first polarizer; laterally stretching a raw film for the first birefringent layer including a material with positive intrinsic birefringence to produce the first birefringent layer; and bonding the first polarizer and the first birefringent layer by roll-to-roll processing. The second step includes: longitudinally stretching a raw film for the second polarizer to produce the second polarizer; laterally stretching a raw film for the second birefringent layer including a material with negative intrinsic birefringence to produce the second birefringent layer; and bonding the second polarizer and the second birefringent layer by roll-to-roll processing.

The above production method enables appropriate adjustment of the Nz coefficients of the first birefringent layer and the second birefringent layer by a simple process of stretching, and also enables appropriate adjustment of the axial relationship between the first birefringent layer and the first polarizer and the axial relationship between the second birefringent layer and the second polarizer. As a result, the present inventors have found that a liquid crystal display device produced by the above production method can maintain orthogonality between the first polarizer and the second polarizer in oblique directions while maintaining orthogonality between the first polarizer and the second polarizer also in the front direction, and can achieve a higher contrast ratio in a wide viewing angle range. Thus, the present inventors have found the solution of the aforementioned problems and arrived at the present invention.

The present invention relates to a method for producing a liquid crystal display device including, in the following order, a first polarizer, a first birefringent layer, a liquid crystal cell, a second birefringent layer, and a second polarizer, wherein absorption axes of the first polarizer and the second polarizer are orthogonal to each other; the first birefringent layer includes a material with positive intrinsic birefringence; and the second birefringent layer includes a material with negative intrinsic birefringence, the method comprising at least one of the following first and second steps, the first step including: longitudinally stretching a raw film for the first polarizer to produce the first polarizer; laterally stretching a raw film for the first birefringent layer to produce the first birefringent layer; and bonding the first polarizer and the first birefringent layer by roll-to-roll processing, and the second step including: longitudinally stretching a raw film for the second polarizer to produce the second polarizer; laterally stretching a raw film for the second birefringent layer to produce the second birefringent layer; and bonding the second polarizer and the second birefringent layer by roll-to-roll processing.

The following will describe the present invention in detail.

The method for producing a liquid crystal display device of the present invention produces a liquid crystal display device including, in the following order, a first polarizer, a first birefringent layer, a liquid crystal cell, a second birefringent layer, and a second polarizer having the absorption axis orthogonal to the absorption axis of the first polarizer. In the case that the first birefringent layer serves as a protecting film for the first polarizer and the second birefringent layer serves as a protecting film for the second polarizer in the above liquid crystal display device, the number of protecting films such as TAC films are reduced in comparison with the case that the first and the second birefringent layers are disposed on either one side of the first or second polarizer of the liquid crystal cell.

The multilayer structure of the liquid crystal display device of the present invention is not used for a liquid crystal display device with a mode such as the IPS mode in which liquid crystal molecules in the liquid crystal cell are aligned parallel to the substrate surface so as to display a black screen, but is used only for a liquid crystal display device in which liquid crystal molecules in the liquid crystal cell are aligned perpendicular to the substrate surface so as to display a black screen. Thus, in order to reduce the number of protecting films, the liquid crystal display device displays a black screen preferably by aligning liquid crystal molecules in the liquid crystal cell perpendicular to the substrate surface. Examples of the liquid crystal display mode in which liquid crystal molecules in the liquid crystal cell are aligned perpendicular to the substrate surface to display a black screen include the TN mode, the ECB mode, the VA mode, and the OCB mode.

The phrase "align liquid crystal molecules perpendicular to the substrate surface" herein does not mean that liquid crystal molecules are required to be aligned strictly perpendicular to the substrate surface. Liquid crystal molecules may be aligned substantially perpendicular to the substrate surface.

The term "polarizer" herein represents an element which converts natural light into linearly polarized light. Either of the first and second polarizers may be a polarizer (a back-side polarizer) and may be an analyzer (a viewing-side polarizer).

The liquid crystal cell generally includes two substrates and a liquid crystal layer disposed between the substrates. The first polarizer and the second polarizer are placed so that the absorption axes are orthogonal to each other (crossed Nicols), and the liquid crystal cell does not show birefringence in the front direction when no voltage is applied. Thus, the liquid crystal display device of the present invention displays an almost perfectly black screen in the front direction when no voltage is applied.

The phrase "two axes or two directions orthogonally (perpendicularly) cross each other (are orthogonal (perpendicular) to each other)" herein means that the angle formed by the axes or directions is preferably strictly 90°, but is not necessarily strictly 90°. In either case of the axes or the directions, they may be substantially orthogonal to each other. Specifically, an angle within 90° $\pm$ 1° contributes to sufficient effects of the present invention.

The phrase "two axes or two directions parallel each other (are parallel to each other)" herein means that the angle formed by the axes or the directions is preferably strictly 0°, but is not necessarily strictly 0°. In either case of the axes or the directions, they may be substantially parallel to each other. Specifically, an angle within 0° $\pm$ 1° contributes to sufficient effects of the present invention.

The term "birefringent layer" herein represents a layer having optical anisotropy, and is synonymous with a retardation film, retardation plate, optically anisotropic layer, birefringent medium, and the like.

The first birefringent layer includes a material with positive intrinsic birefringence. The second birefringent layer includes a material with negative intrinsic birefringence. The aforementioned production method includes at least one of the following first and second steps. The first step includes: longitudinally stretching a raw film for the first polarizer to produce the first polarizer; laterally stretching a raw film for the first birefringent layer to produce the first birefringent layer; and bonding the first polarizer and the first birefringent layer by roll-to-roll processing. The second step includes: longitudinally stretching a raw film for the second polarizer to produce the second polarizer; laterally stretching a raw film for the second birefringent layer to produce the second birefringent layer; and boding the second polarizer and the second birefringent layer by roll-to-roll processing. The continuous bonding by roll-to-roll processing contributes to reduction in the production cost in comparison with individual stacking procedure with a pressure-sensitive adhesive after cutting of polarizers and birefringent layers into a predetermined size (the procedure in which the polarizers and the birefringent layers each are cut into a predetermined size and then bonded one by one with an adhesive). Since the first birefringent layer and the second birefringent layer can be used as protecting films for the first polarizer and the second polarizer, respectively, and thus the number of protecting films are reduced, the liquid crystal display device with an improved performance is produced at low cost.

The liquid crystal display device produced by the aforementioned production method is allowed to maintain orthogonality between the first polarizer and the second polarizer in oblique directions while maintaining orthogonality between the first polarizer and the second polarizer in the front direction. Thus, the liquid crystal display device achieves a higher contrast ratio in a wide viewing angle range. This will be specifically described hereinbelow.
In the present invention, the first polarizer and the second polarizer basically include a polyvinyl alcohol (PVA) film with a dichroic anisotropic material such as an iodine complex adsorbed and aligned thereon, what is called an O-type polarizer. Thus, the direction of stretching raw films for the first polarizer and the second polarizer are the absorption-axis directions of the first polarizer and the second polarizer. In contrast, a raw film for the first birefringent layer includes a material with positive intrinsic birefringence. Thus, the direction of stretching the raw film for the first birefringent layer is the in-plane slow axis direction of the first birefringent layer. In addition, a raw film for the second birefringent layer includes a material with negative intrinsic birefringence. Thus, the direction of stretching the raw film for the second birefringent layer is the direction orthogonal to the in-plane slow axis direction of the second birefringent layer (the in-plane fast axis direction). Here, in the aforementioned production method, the direction of stretching the raw film for the first polarizer and the direction of stretching the raw film for the first birefringent layer are orthogonal, and the direction of stretching the raw film for the second polarizer and the direction of stretching the raw film for the second birefringent layer are orthogonal. Thus, the absorption axis of the first polarizer and the in-plane slow axis of the first birefringent layer are orthogonal, and the absorption axis of the second polarizer and the in-plane slow axis of the second birefringent layer are parallel in the liquid crystal display device produced through the aforementioned production method. In the case of lateral stretching of the raw films, stretching of the films in the roll-width direction involves free shrinkage of the film in the film-thickness direction, while shrinkage of the films in the roll-flow direction is inhibited because the films are held by a roller for film winding. This gives the effects similar to those obtained in the case of stretching the films in not only the roll-width direction but also the roll-flow direction (biaxial stretching in longitudinal and lateral directions). As a result, the first birefringent layer produced by lateral stretching of the raw film including a material with positive intrinsic birefringence satisfies $nx >> ny > nz$ and $Nz > 1$ in many cases. Also as a result, the second birefringent layer produced by lateral stretching of the raw film including a material with negative intrinsic birefringence satisfies $nx << ny < nz$ and $Nz < 0$ in many cases.
From the above, the liquid crystal display device produced by the production method of the present invention has an appropriately adjusted Nz coefficient of the first birefringent layer, axial relationship between the first birefringent layer and the first polarizer, Nz coefficient of the second birefringent layer, and axial relationship between the second birefringent layer and the second polarizer. Thus, the orthogonality of the first polarizer and the second polarizer is retained in oblique directions while the orthogonality of the first polarizer and the second polarizer is retained in the front direction. As a result, the liquid crystal display device achieves a higher contrast ratio in a wide viewing angle range.

In the present invention, the raw films for the polarizers are longitudinally stretched and the raw films for the birefringent layers are laterally stretched upon bonding the polarizers (the first polarizer and the second polarizer) and the birefringent layers (the first birefringent layer and the second birefringent layer) by roll-to-roll processing. Here, it seems acceptable that the method includes lateral stretching of the raw films for the polarizers and longitudinal stretching of the raw films for the birefringent layers as long as the direction of stretching the raw films for the polarizers and the direction of stretching the raw films for the birefringent layers are orthogonal. However, lateral stretching of the raw films gives the effects substantially similar to those obtained by longitudinal and lateral biaxial stretching processes as mentioned above. Thus, lateral stretching of the raw films for the polarizers may causes reduction in the degree of orientation of a dichroic material such as an iodine complex, and this may result in an insufficient degree of polarization. Thus, upon the bonding of the polarizers and the birefringent layers by roll-to-roll processing in the present invention, the raw film for a polarizer is longitudinally stretched and the raw film for a birefringent layer is laterally stretched, instead of laterally stretching the raw film for a polarizer and longitudinally stretching the raw film for a birefringent layer.

The term "raw film" herein represents a film before stretched (unstretched film). The term "longitudinal stretching" means that a raw film is stretched in the roll-flow direction. The term "lateral stretching" means that a raw film is stretched in the direction perpendicular to the roll-flow direction (roll-width direction).

The method for producing a liquid crystal display device according to the present invention is not especially limited as long as it includes at least one of the first step and the second step. The production method may or may not include other steps. In order to further simplify the production, the method for producing a liquid crystal display device of the present invention preferably includes both the first step and the second step. The order and the timing of carrying out the first step and the second step are not particularly limited. The first step and the second step may be simultaneously carried out; the first step may be first carried out and then the second step may be carried out; or the second step may be first carried out and then the first step may be carried out.

Preferably, the first birefringent layer satisfies $1.1 \leq Nz(550) \leq 2$, and has an in-plane slow axis forming an angle of 90° with the absorption axis of the first polarizer. Such a layer contributes to a higher contrast ratio in a wide viewing angle range (a viewing-angle compensation) without reduction in the contrast ratio in the front direction. The liquid crystal display device of such a structure is easily produced by the aforementioned production method. As mentioned here, the first birefringent layer may satisfy 1.1 ≤ Nz(550) ≤ 2, and may have an in-plane slow axis (substantially) orthogonal to the absorption axis of the first polarizer. The term "Nz (λ)" herein represents an Nz coefficient at a wavelength of λ nm. Assuming that the principal refractive index of a birefringent layer in the in-plane direction is nx and ny (nx > ny) and the principal refractive index thereof in the out-of-plane direction is nz, the Nz coefficient is defined as Nz = (nx-nz)/(nx-ny). The first birefringent layer more preferably satisfies 1.2 ≤ Nz(550) ≤ 1.6. The wavelength λ for the measurements of the principal refractive index, the retardation, and the like optical characteristics herein is 550 nm unless otherwise mentioned.

Even in the case of birefringent layers each having the same Nz coefficient, difference in the average refractive indices (nx+ny+nz)/3 of the birefringent layers causes difference in effective retardations of the birefringent layers to incident light from oblique directions due to refractive angles. Thus, the design principle becomes complicated. In order to avoid this problem, the average refractive index of each birefringent layer is herein standardized to 1.5 for Nz coefficient calculation, unless otherwise mentioned. For the birefringent layer having an actual average refractive index of not 1.5, the value is converted assuming that the average refractive index is 1.5. The below-mentioned retardation Rxz is also standardized in the same manner.

Preferably, the second birefringent layer satisfies - 1 ≤ Nz(550) ≤ -0.1, and has an in-plane slow axis forming an angle of 0° with the absorption axis of the second polarizer. Such a layer causes a higher contrast ratio in a wide viewing angle range (a viewing-angle compensation) without reduction in the contrast ratio in the front direction. The liquid crystal display device of such a structure is easily produced by the aforementioned production method. As mentioned here, the second birefringent layer may satisfy -1 ≤ Nz(550) ≤ -0.1, and may have an in-plane slow axis (substantially) parallel to the absorption axis of the second polarizer. The second birefringent layer more preferably satisfies -0.6 ≤ Nz (550) ≤ 0.2.

The present invention also relates to a liquid crystal display device including, in the following order, a first polarizer, a first birefringent layer, a liquid crystal cell, a second birefringent layer, and a second polarizer having an absorption axis orthogonal to the absorption axis of the first polarizer, wherein the first birefringent layer satisfies 1.1 ≤ Nz(550) ≤ 2 and has an in-plane slow axis orthogonal to the absorption axis of the first polarizer, and the second birefringent layer satisfies -1 ≤ Nz(550) ≤ -0.1 and has an in-plane slow axis parallel to the absorption axis of the second polarizer. Such a liquid crystal display device achieves a higher contrast ratio in a wide viewing angle range (a viewing-angle compensation) without reduction in the contrast ratio in the front direction. This liquid crystal display device may be produced by any method, and may be produced by, for example, the method for producing a liquid crystal display device of the present invention.

As mentioned above, it is preferable that the liquid crystal molecules in the liquid crystal cell are aligned perpendicular to the substrate surface in the liquid crystal display device, and thereby the liquid crystal display device displays a black screen in order to reduce the number of protecting films.

With respect to the mode for the liquid crystal display devices in which the liquid crystal molecules in the liquid crystal cell are aligned perpendicular to the substrate surface to display a black screen, examples thereof include the TN mode, the ECB mode, the VA mode, and the OCB mode. The first birefringent layer preferably satisfies 1.2 ≤ Nz(550) ≤ 1.6. The second birefringent layer preferably satisfies -0.6 ≤ Nz(550) ≤ -0.2.

In order to achieve a higher contrast ratio in a wide viewing angle range (a viewing-angle compensation) without reduction in the contrast ratio in the front direction, the in-plane slow axis of the first birefringent layer and the absorption axis of the first polarizer are basically required to form an angle of 90° and the in-plane slow axis of the second birefringent layer and the absorption axis of the second polarizer are basically required to form an angle of 0°. Here, the in-plane slow axis of the first birefringent layer and the absorption axis of the first polarizer may form an angle which slightly deviates from 90°, and the in-plane slow axis of the second birefringent layer and the absorption axis of the second polarizer may form an angle which slightly deviates from 0°. This is because as follows. In order to maintain the contrast ratio in the front direction, it is required to (1) disable the birefringent layer in the front direction. In order to compensate the viewing angle, it is required to (2) enable the birefringent layer in oblique directions. In order to satisfy the condition (1), the birefringent layers and the polarizers are required to satisfy either of the following axial relationships: (a) the optic axis of the polarizer and the optic axis of the birefringent layer are parallel when viewed from the front direction (Fig. 12(a)); and (b) the optic axis of the polarizer and the optic axis of the birefringent layer are orthogonal when viewed from the front direction (Fig. 13(a)). The term "optic axis" herein does not represent the optic axis strictly used in crystal optics, and is defined as follows. Assuming that the average value of the three principal refractive indices of the birefringent layer is calculated and then the difference between each principal refractive index and the average value is calculated, the principal axis which corresponds to the principal refractive index having the maximum absolute value of the difference is the "optic axis" herein. Thus, an optically biaxial birefringent layer has not two but a single "optic axis." As mentioned here, the "optic axis" of the biaxial birefringent layer corresponds to the optic axis of the conventional definition when it is optically approximated to a uniaxial birefringent layer. In order to satisfy the condition (2), the axes are required to satisfy not the relationship (a) but the relationship (b). This is because as follows. When light is incident into a laminate of the polarizers and the birefringent layers from an oblique direction, the birefringent layer shows substantially no contribution in the oblique direction in the case that the effective transmission axis of the polarizer viewed from the oblique direction is parallel to one of the vibrating directions in the two eigenmodes of vibration of the birefringent layer (the vibrating direction of the electrical potential displacement vector D) to the incident light from the oblique direction. That is, in order to enable the birefringent layer in the oblique direction, the effective transmission axis of the polarizer viewed from the oblique direction is required to be neither parallel nor perpendicular to the vibrating direction in the eigenmodes of polarization of the birefringent layer. In the case that the optic axis of the polarizer and the optic axis of the birefringent layer are parallel as in the condition (a), the effective transmission axis of the polarizer is parallel to one vibrating direction in the two eigenmodes of vibration of the birefringent layer viewed from any direction, as shown in Fig. 12(b). Thus, the birefringent layer is disabled. In contrast, in the case that the optic axis of the polarizer and the optic axis of the birefringent layer are orthogonal as in the condition (b), the effective transmission axis of the polarizer is neither parallel nor orthogonal to the vibrating direction in the eigenmodes of polarization of the birefringent layer viewed from oblique directions, as shown in Fig. 13(b). Thus, the birefringent layer is enabled. The polarizer in the present invention preferably includes a PVA film with a dichroic anisotropic material such as an iodine complex adsorbed and aligned thereon, what is called an O-type polarizer. The O-type polarizer absorbs light vibrating in a specific direction in the plane of the element (defined as the absorption axis), and transmits light vibrating in the direction orthogonal to the absorption axis in the plane of the element (defined as the transmission axis) and light vibrating in the normal direction of the element. That is, the O-type polarizer has one absorption axis and two transmission axes, and the optic axis of the O-type polarizer is along the absorption axis. The first birefringent layer satisfying Nz = 1 serves as a uniaxial birefringent layer and the in-plane fast axis thereof serves as the optic axis. Here, in the case that the first birefringent layer satisfies $1.1 \leq Nz(550) \leq 2$, the optic axis thereof is parallel to the in-plane slow axis. Thus, the in-plane slow axis of the first birefringent layer and the absorption axis of the first polarizer are basically required to form an angle of 90°. The angle may slightly deviate from 90° as long as the viewing angle is compensated without reduction in the contrast ratio in the front direction. Specifically, an angle within 90° ± 1° contributes to sufficient effects of the present invention. The second birefringent layer satisfying Nz = 0 serves as a uniaxial birefringent layer and the axis orthogonal to the in-plane slow axis (the in-plane fast axis) thereof serves as the optic axis. Here, in the case that the second birefringent layer satisfies $-1 \leq Nz(550) \leq -0.1$, the optic axis thereof is parallel to the in-plane fast axis. Thus, the in-plane slow axis of the second birefringent layer and the absorption axis of the second polarizer are basically required to form an angle of 0°. The angle may slightly deviate from 0° as long as the viewing angle is compensated without reduction in the contrast ratio in the front direction. Specifically, an angle within 0° ± 1° contributes to sufficient effects of the present invention.

As mentioned here, the present invention also relates to the liquid crystal display device including, in the following order, the first polarizer, the first birefringent layer, the liquid crystal cell, the second birefringent layer, and the second polarizer having the absorption axis orthogonal to the absorption axis of the first polarizer, wherein the first birefringent layer satisfies $1.1 \leq Nz(550) \leq 2$ and has an in-plane slow axis forming an angle of (substantially) 90° with the absorption axis of the first polarizer, and the second birefringent layer satisfies $-1 \leq Nz(550) \leq -0.1$ and has an in-plane slow axis forming an angle of (substantially) 0° with the absorption axis of the second polarizer.

The liquid crystal display device of the present invention is not especially limited as long as it essentially includes the first polarizer, the second polarizer, the liquid crystal cell, the first birefringent layer, and the second birefringent layer as the components. The liquid crystal display device may or may not include other components.

Preferable embodiments of the liquid crystal display device of the present invention are mentioned in detail hereinbelow. The method for producing the liquid crystal display device according to these preferable embodiments of the present invention is not especially limited, and the liquid crystal display device is easily produced by the method for producing a liquid crystal display device of the present invention. That is, the method for producing a liquid crystal display device of the present invention is appropriate for the production of the liquid crystal display device of the present invention.

The first birefringent layer preferably includes a material with positive intrinsic birefringence. Such a layer enables easy production of the liquid crystal display device of the present invention by the method for producing a liquid crystal display device of the present invention. Thus, the performance and productivity of the liquid crystal display device of the present invention are improved.

The second birefringent layer preferably includes a material with negative intrinsic birefringence. Such a layer enables easy production of the liquid crystal display device of the present invention by the method for producing a liquid crystal display device of the present invention. Thus, the performance and productivity of the liquid crystal display device of the present invention are improved.

The liquid crystal display device preferably satisfies $0 \leq Nz'(550) \leq 1$ wherein Nz'(550) represents an arithmetic mean between Nz(550) of the first birefringent layer and Nz(550) of the second birefringent layer. This enables preferable retention of the orthogonality between the first polarizer and the second polarizer even in oblique directions. Thus, a still higher contrast ratio is achieved in a wide viewing angle range. In order to preferably maintain the orthogonality between the first polarizer and the second polarizer even in oblique directions, the liquid crystal display device more preferably satisfies $0.3 \leq Nz'(550) \leq 0.7$, further preferably satisfies $0.4 \leq Nz'(550) \leq 0.6$, and particularly preferably satisfies Nz, (550) = 0.5.

At least one of the first birefringent layer and the second birefringent layer satisfies preferably |Rxy(550)| ≤ 130 nm, more preferably |Rxy(550)| ≤ 110 nm, and further preferably |Rxy(550)| ≤ 100 nm. It is more preferable that both of the first birefringent layer and the second birefringent layer satisfy |Rxy(550)| ≤ 130 nm, further preferable that they satisfy |Rxy(550)| ≤ 110 nm, and particularly preferable that they satisfy |Rxy(550)| ≤ 100 nm. Reasons for this are as follows. The smaller the value of |Rxy(550)| is, the more easily the layers each are allowed to serve as a film satisfying |Rxy(450)| ≤ |Rxy(550)|Rxy(650)| (a retardation film with reverse wavelength dispersion). The retardation film with reverse wavelength dispersion prevents coloring upon displaying a black screen in a wide viewing angle range, and enables liquid crystal display with a higher contrast ratio.

The preferable embodiments of the liquid crystal display device are classified as follows according to the difference between the degrees of biaxiality of the first and second birefringent layers. In the case of serving as a uniaxial birefringent layer, the first birefringent layer satisfies Nz = 1, and the second birefringent layer satisfies Nz = 0. Thus, the biaxial parameter ΔNz1 of the first birefringent layer is defined as |Nz(550)-1|, and the biaxial parameter ΔNz2 of the second birefringent layer is defined as |Nz(550)|. Here, the first birefringent layer satisfies 1.1 ≤ Nz(550) ≤ 2 and the second birefringent layer satisfies -1 ≤ Nz(550) ≤ -0.1. Thus, the liquid crystal display device satisfies 0.1 ≤ ΔNa1 ≤ 1 and 0.1 ≤ ΔNz2 ≤ 1. In this case, the preferable embodiments of the liquid crystal display device include (1) an embodiment satisfying ΔNz1 = ΔNz2, (2) an embodiment satisfying ΔNz1 < ΔNz2, and (3) an embodiment satisfying ΔNz1 > ΔNz2.

In the embodiment (1), the first and second birefringent layers have the same degree of biaxiality, and Nz'(550) = 0.5 is satisfied. In this embodiment, the first and second birefringent layers each require a retardation |Rxy(550)| almost equal to each other, and the retardations can be low. Thus, at least one of the first and second birefringent layers are allowed to serve as a film satisfying |Rxy(450)| ≤ |Rxy(550)| ≤ |Rxy(650)| (a retardation film with reverse wavelength dispersion). This results in prevention of coloring upon displaying a black screen in a wide viewing angle range, and enables liquid crystal display with a higher contrast ratio. Fig. 14 and Table 1 show the relationship between ΔNz1, ΔNz2, and an optimum |Rxy(550)| in the case that ΔNz1 = ΔNz2 is satisfied (in the figure, "■" represents the first birefringent layer and "Δ" represents the second birefringent layer).

[Table 1]

| ⊿Nz1, ⊿Nz2 | First birefringent layer optimum \|Rxy(550)\| (nm) | Second birefringent layer optimum \|Rxy(550)\| (nm) |
|---|---|---|
| O | 92 | 92 |
| 0.1 | 87 | 87 |
| 0.3 | 80 | 80 |
| 0.4 | 77 | 77 |
| 0.5 | 74 | 74 |
| 1 | 64 | 64 |
| 4 | 41 | 41 |
| 5 | 38 | 38 |
| 10 | 29 | 29 |

Fig. 14 and Table 1 show that |Rxy(550)| of less than 64 nm may cause failure in obtaining the effects of the present invention even in the case of the maximum ΔNz1 and ΔNz2 (ΔNz1 = ΔNz2 = 1), while |Rxy(550)| of higher than 87 nm may cause failure in obtaining the effects of the present invention even in the case of the minimum ΔNz1 and ΔNz2 (ΔNz1 = ΔNz2 = 0.1).

In the embodiment (2), the first birefringent layer has a relatively low biaxial parameter and the second birefringent layer has a relatively high biaxial parameter. In this embodiment, the second birefringent layer requires a lower retardation |Rxy(550)| as compared with the embodiment (1). Thus, the second birefringent layers is allowed to serve as a film satisfying |Rxy(450)| ≤ |Rxy(550)| ≤ |Rxy(650)| (a retardation film with reverse wavelength dispersion). This results in prevention of coloring upon displaying a black screen in a wide viewing angle range, and enables liquid crystal display with a higher contrast ratio. Fig. 15 and Table 2 show the relationship between ΔNz1, ΔNz2, and an optimum |Rxy(550)| in the case that ΔNz1 = 0 and 0 < ΔNz2 are satisfied (in the figure, "■" represents the first birefringent layer and "Δ" represents the second birefringent layer).

[Table 2]

| ⊿Nz1, ⊿Nz2 | First birefringent layer optimum \|Rxy(550)\| (nm) | Second birefringent layer optimum \|Rxy(550)\| (nm) |
|---|---|---|
| 0 | 92 | 92 |
| 0.1 | 96 | 83 |
| 0.3 | 103 | 70 |
| 0.4 | 106 | 64 |
| 0.5 | 108 | 60 |
| 1 | 116 | 45 |
| 4 | 129 | 18 |
| 5 | 131 | 15 |
| 10 | 134 | 8 |

The present invention satisfies 0.1 ≤ ΔNz1. The closer the value of ΔNz1 is to the value of ΔNz2, the closer the invention is to the embodiment (1) (ΔNz1 = ΔNz2). Thus, in the embodiment (2), the optimum |Rxy(550)| for each of ΔNz1 and ΔNz2 is presumably between the optimum |Rxy(550)| obtained from Table 1 and the optimum |Rxy(550)| obtained from Table 2.

In the embodiment (3), the first birefringent layer has a relatively high biaxial parameter and the second birefringent layer has a relatively low biaxial parameter. In this embodiment, the first birefringent layer requires a lower retardation |Rxy(550)| as compared with the embodiment (1). Thus, the first birefringent layers is allowed to serve as a film satisfying |Rxy(450)| ≤ |Rxy(550)| ≤ |Rxy(650)| (a retardation film with reverse wavelength dispersion). This results in prevention of coloring upon displaying a black screen in a wide viewing angle range, and enables liquid crystal display with a higher contrast ratio. Fig. 16 and Table 3 show the relationship between ANz1, ΔNz2, and an optimum |Rxy(550) | in the case that ΔNz2 = 0 and 0 < ΔNz1 are satisfied (in the figure, "■" represents the first birefringent layer and "△" represents the second birefringent layer).

[Table 3]

| ⊿Nz1, ⊿Nz2 | First birefringent layer optimum \|Rxy(550)\| (nm) | Second birefringent layer optimum \|Rxy(550)\| (nm) |
|---|---|---|
| 0 | 92 | 92 |
| 0.1 | 83 | 96 |
| 0.3 | 70 | 103 |
| 0.4 | 64 | 106 |
| 0.5 | 60 | 108 |
| 1 | 45 | 116 |
| 4 | 18 | 129 |
| 5 | 15 | 131 |
| 10 | 8 | 134 |

The present invention satisfies 0.1 ≤ ΔNz1. The closer the value of ΔNz2 to the value of ΔNz1, the closer the invention is to the embodiment (1) (ΔNz1 = ΔNz2). Thus, in the embodiment (3), the optimum |Rxy(550)| for each of ΔNz1 and ΔNz2 is presumably between the optimum |Rxy(550)| obtained from Table 1 and the optimum |Rxy(550)| obtained from Table 3.

At least one of the first birefringent layer and the second birefringent layer preferably satisfies |Rxy(450)| ≤ |Rxy (550)| ≤ |Rxy(650)|. In this case, at least one of the first birefringent layer and the second birefringent layer is a retardation film with reverse wavelength dispersion. Thus, coloring upon displaying a black screen is prevented in a wide viewing angle range, and liquid crystal display with a higher contrast ratio is achieved.

The terms "Rxy(λ)" and "Rxz(λ)" herein represent the retardations Rxy and Rxz at a wavelength of λ nm. Assuming that the thickness of the birefringent layer is d, Rxy is defined as $Rxy = (nx - ny) \times d$ (unit: nm) and Rxz is defined as $Rxz = (nx - nz) \times d$ (unit: nm).

The term "in-plane slow axis of the birefringent layer" herein represents the direction of principal dielectric axis (x-axis direction) corresponding to the principal refractive index nx.

The liquid crystal display device more preferably satisfies $\alpha' \leq 1$ and $1 \leq \beta'$, wherein α' represents an arithmetic mean between the wavelength dispersibility of the first birefringent layer $\alpha 1$ = Rxy(450)/Rxy(550) and the wavelength dispersibility of the second birefringent layer $\alpha 2$ = Rxy(450)/Rxy(550), and β' represents an arithmetic mean between the wavelength dispersibility of the first birefringent layer $\beta 1$ = Rxy(650)/Rxy(550) and the wavelength dispersibility of the second birefringent layer $\beta 2$ = Rxy(650)/Rxy(550). This allows the effective condition of wavelength dispersion to be reverse wavelength dispersion in the two birefringent layers (the first and second birefringent layers) placed between the two polarizers (the first and second polarizers) at crossed Nicols. Thus, coloring upon displaying a black screen is further prevented. It is more preferable that both of the first and second birefringent layers satisfy $|Rxy(450)| \leq |Rxy(550)| \leq |Rxy(650)|$.

Preferably, the liquid crystal display device displays a black screen by aligning liquid crystal molecules in the liquid crystal cell perpendicular to the substrate surface, and has a third birefringent layer satisfying $Rxy \leq 10$ nm and $Rxz \geq 100$ nm between the first polarizer and the second polarizer. Such a layer cancels excessive retardation of the liquid crystal cell in oblique directions upon displaying a black screen. Thus, coloring upon displaying a black screen is further prevented in a wide viewing angle range, and liquid crystal display with a still higher contrast ratio is achieved.

The third birefringent layer preferably satisfies 0 nm $\leq Rxy \leq$ 10 nm and 100 nm $\leq Rxz \leq$ 400 nm. In order to effectively achieve the effects of the present invention, the third birefringent layer is preferably disposed adjacent to the liquid crystal cell.

The phrase "disposed adjacent to" herein means that no birefringent medium is disposed between the liquid crystal cell and the third birefringent layer. In one embodiment, for example, an isotropic film may be disposed between the third birefringent layer and the liquid crystal cell.

## EFFECTS OF THE INVENTION

The method for producing a liquid crystal display device of the present invention makes it possible to easily produce a liquid crystal display device at low cost. In the liquid crystal display device, a higher contrast ratio is achieved in a wide viewing angle range.

## BEST MODE FOR CARRYING OUT THE INVENTION

### (Birefringent layer)

With respect to the birefringent layers used in the present invention, the specific materials and optical characteristics other than the intrinsic birefringence or Nz(550) are not especially limited. Examples of the materials include thin plates made of inorganic materials, stretched polymer films, and ones in which alignment of liquid crystalline molecules is fixed. The method for producing the birefringent layer will be mentioned later. The following will in more detail describe the birefringent layers classified by types.

### (First birefringent layer)

The first birefringent layer may include a conventional material such as one formed by stretching a polymer film with positive intrinsic birefringence. Examples of the polymer film material with positive intrinsic birefringence include polycarbonate, polysulfone, polyether sulfone, polyethylene terephthalate, polyethylene, polyvinyl alcohol, norbornene, triacetyl cellulose, and diatyl cellulose.

### (Second birefringent layer)

The second birefringent layer may include a conventional material such as one formed by stretching a polymer film with negative intrinsic birefringence and one formed by stretching a resin film with positive intrinsic birefringence under the influence of contractile force of a thermo-shrinkable film. For simplification of the production method, one formed by stretching a polymer film with negative intrinsic birefringence is preferable. Examples of the polymer film material with negative intrinsic birefringence include polystyrene, polyvinyl naphthalene, polyvinyl biphenyl, polyvinyl pyridine, polymethyl methacrylate, polymethyl acrylate, an N-substituted maleimide copolymer, and fluorene skeleton-containing polycarbonate.

(Third birefringent layer)

The third birefringent layer may include a conventional material such as one formed by stretching a polymer film with positive intrinsic birefringence, one coated with a liquid crystalline compound e.g. a chiral nematic liquid crystal and a discotic liquid crystal, and one coated with a non-liquid crystalline compound including a polymer e.g. polyimide and polyamide.

(Polarizer)

The polarizer may include a conventional material such as a polyvinyl alcohol (PVA) film with a dichroic anisotropic material such as an iodine complex adsorbed and aligned thereon.

(Liquid crystal cell)

The liquid crystal cell may be a conventional one. Examples of the liquid crystal display panel include liquid crystal cells with a mode such as the TN mode, the ECB mode, the VA mode, the OCB mode, or the IPS mode. The VA mode includes the MVA mode, the PVA mode, the BVA mode, the Reverse TN mode, and the like.

(Method for measuring retardations Rxy(550) and Rxz(550))

The retardations were measured with a spectroscopic ellipsometer (M-220, JASCO Corp.). Rxy(550) was measured from the normal direction of the retardation film. Rxz(550) was calculated by curve fitting with a known index ellipsoid. For the calculation, retardations of the retardation film were measured from the normal direction, the direction with an inclination angle of 40° from the normal direction, and the direction with an inclination angle of -40° from the normal direction. Azimuths of the inclinations each were made orthogonal to the in-plane slow axis.

(Method for measuring Nz, nx, ny, and nz)

Nz, nx, ny, and nz were measured with a dual-rotating retarder polarimeter (Axo-scan, Axometrics, Inc.). Nz, nx, ny, and nz were calculated by curve fitting with a known index ellipsoid. For the calculation, retardations of the birefringent layer were measured from the normal direction and the directions each with an inclination angle of -50° to 50° from the normal direction. Azimuths of the inclinations each were made orthogonal to the in-plane slow axis. Nz, nx, ny, and nz depend on the average refractive index = (nx+ny+nz)/3, which is given as the condition for the curve fitting calculation. Here, the average refractive index of each birefringent layer was set to 1.5. Even in the case of the birefringent layer having an actual average refractive index of not 1.5, the average refractive index was converted into 1.5.

(Method for measuring viewing angle dependence of contrast of liquid crystal display device)

The viewing angle dependence of contrast was measured with a viewing angle measuring apparatus (EZContrast 160, ELDIM). The light source was a backlight mounted on a liquid crystal television (LC37-GH1, SHARP Corp.). Brightnesses upon displaying a white screen and a black screen were measured in the oblique direction with an azimuth angle of 45° and an inclination angle of 60°. The ratio thereof was regarded as CR (45, 60).

The present invention is mentioned in more detail showing embodiments but not limited to these embodiments.

(Embodiment 1)

Fig. 1 is a perspective view that schematically shows the structure of the liquid crystal display device of Embodiment 1.

As shown in Fig. 1, the liquid crystal display device of Embodiment 1 according to the present invention is a VA liquid crystal display device 100a produced by stacking a TAC film 10a, a first polarizer 11a, a first birefringent layer 21a including a material with positive intrinsic birefringence, a third birefringent layer 23a, a VA liquid crystal cell 50a, a second birefringent layer 22a including a material with negative intrinsic birefringence, a second polarizer 12a, and a TAC film 20a, in this order. The optical characteristics and axial designs of the birefringent films, the polarizers, and the liquid crystal cell of the present embodiment are as shown in Table 4. The VA liquid crystal cell 50a includes a back-side substrate 1a, a viewing-side substrate 2a which is opposite to the substrate 1a, and a liquid crystal layer which is disposed between the substrates 1a and 2a and which contains liquid crystal molecules 3a. Each of the liquid crystal molecules 3a is aligned so that the longitudinal axis L is almost vertical to the substrates 1a and 2a when no voltage is applied.

Table 4 does not show the optical characteristics of the TAC films disposed outside the polarizer (the side closer to the liquid crystal cell is defined as the inside, and the side farther therefrom is defined as the outside) because the outside TAC films have no influence on the optical characteristics of the liquid crystal display device if only they are transparent films. The same is applied to the following embodiments. In the table, the axis of each birefringent layer is defined by the azimuth angle of the in-plane slow axis, and the axis of each polarizer is defined by the absorption axis. In the table, the name of the material and the intrinsic birefringence (birefringence) $\Delta n$ of each birefringent layer are indicated by means of the following abbreviations.

PMMA: polymethylmethacrylate (intrinsic birefringence $\Delta n$: -)
NB: norbornene (intrinsic birefringence $\Delta n$: +)
TAC: triacetyl cellulose (intrinsic birefringence $\Delta n$: + in general, depending on the degree of acetylation)
Z: isotropic film (intrinsic birefringence $\Delta n$: +)
G: resin film with reverse dispersibility (intrinsic birefringence $\Delta n$: +)
PC: polycarbonate (intrinsic birefringence $\Delta n$: +)
NM: N-substituted maleimide copolymer (intrinsic birefringence $\Delta n$: -)
ChLC: cholesteric liquid crystal (birefringence $\Delta n$: - )

In the table, $\alpha$, $\beta$, $\alpha'$, and $\beta'$ are represented by the following formulas (1) to (4).

$$\alpha = |Rxy(450)|/|Rxy(550)| \quad (1)$$

$$\beta = |Rxy(650)|/|Rxy(550)| \quad (2)$$

$$\alpha' = (\alpha 1 + \alpha 2)/2 \quad (3)$$

$$\beta' = (\beta 1 + \beta 2)/2 \quad (4)$$

Here, $\alpha l$ and $\alpha 2$ are $\alpha$s of the first birefringent layer and the second birefringent layer, respectively, while $\beta 1$ and $\beta 2$ are $\beta$s of the first birefringent layer and the second birefringent layer, respectively.

The following will describe a method for producing the liquid crystal display device of Embodiment 1.

(1) Production of roll materials

First, rolls of the TAC films 10a and 20a, a roll of the first birefringent layer 21a, a roll of the second birefringent layer 22a, and a roll of the third birefringent layer 23a are produced.
Specifically, the rolls of the TAC films 10a and 20a, and the roll of the third birefringent layer 23a are produced by melt casting (casting) or the like techniques.
As shown in Fig. 2(a), the roll of the first birefringent layer 21a is produced as follows: a raw film 71a for the first birefringent layer including a material with positive intrinsic birefringence is laterally stretched (stretched in the roll-width direction) at a unit 71 for imparting the retardation function, and then the stretched film is rolled up.
As shown in Fig. 2(d), the roll of the second birefringent layer 22a is produced as follows: a raw film 72a for the second birefringent layer including a material with negative intrinsic birefringence is laterally stretched (stretched in the roll-width direction) at a unit 72 for imparting the retardation function, and then the stretched film is rolled up.

(2) Bonding by roll-to-roll processing

As shown in Fig. 2(b), a raw film 73a for the first polarizer is longitudinally stretched (stretched in the roll-flow direction) at a unit 73 for imparting the polarization function, and thereby a first polarizer 11a is produced; while an adhesive is applied to the TAC film 10a at an adhesive-applying unit 74. The first polarizer 11a and the TAC film 10a are continuously bonded via the adhesive by roll-to-roll processing at a bonding unit 75a, and then the bonded material is rolled up (a roll material 90 is produced).

As shown in Fig. 2(c), an adhesive is applied to the first birefringent layer 21a at an adhesive-applying unit 76. The first polarizer 90 with the TAC film bonded thereto and the first birefringent layer 21a are continuously bonded via the adhesive by roll-to-roll processing at a bonding unit 75b, and then the bonded material is rolled up (a roll material 91 is produced). Similarly, the first birefringent layer 21a with the first polarizer 11a and other films bonded thereto and the third birefringent layer 23a are continuously bonded via the adhesive by roll-to-roll processing. The first polarizing plate 80a thus obtained is dried and then rolled up.

As shown in Fig. 2(e), a raw film 77a for the second polarizer is longitudinally stretched at a unit 77 for imparting the polarization function, and thereby a second polarizer 12a is produced; while an adhesive is applied to a TAC film 20a at an adhesive-applying unit 78. The second polarizer 12a and the TAC film 20a are continuously bonded via the adhesive by roll-to-roll processing at a bonding unit 75c, and then the bonded material is rolled up (a roll material 92 is produced).

As shown in Fig. 2(f), an adhesive is applied to a second birefringent layer 22a at an adhesive-applying unit 79. The second polarizer 92 with the TAC film bonded thereto and the second birefringent layer 22a are continuously bonded via the adhesive by roll-to-roll processing at a bonding unit 75d. The second polarizing plate 81a thus obtained is dried and then rolled up.

(3) Attachment to liquid crystal cell

Release films (such as PET films) are peeled off from the first and second polarizing plates 80a and 81a, and the polarizing plates each are attached to a VA liquid crystal cell 50a via pressure-sensitive adhesive on the polarizing plates. Thereby, the liquid crystal display device of Embodiment 1 is completed.

(Embodiments 2 to 5)

The liquid crystal display devices of Embodiments 2 to 5 according to the present invention each are almost the same liquid crystal display device of Embodiment 1 except that the values of $\Delta Nz1$ and $\Delta Nz2$ (each has the same value) are changed to 0.1, 0.2, 0.6, and 1.0, respectively. Table 4 shows the optical characteristics and axial designs of the birefringent films, the polarizers, and the liquid crystal cells of the present embodiments.

[Table 4]

| | Optical components | Material (Δ n) | Angle [° ] | \|Rxy(550)\| [nm] | Rxz(550) [nm] | Nz(550) | α | β | α' | β' | CR (45,60) | ⊿E (45,60) |
|---|---|---|---|---|---|---|---|---|---|---|---|---|
| Embodiment 1 | Second polarizer | | 0 | | | | | | 1.03 | 0.99 | 74 | 0.13 |
| | Second birefringent layer | PMMA(-) | 0 | 80 | -24 | -0.3 | 1.05 | 0.98 | | | | |
| | VA liquid crystal cell | | | | 320 | | 1.05 | 0.97 | | | | |
| | Third birefringent layer | NB(+) | | 5 | 305 | | 1.00 | 1.00 | | | | |
| | First birefringent layer | NB(+) | 0 | 80 | 104 | 1.3 | 1.00 | 1.00 | | | | |
| | First polarizer | | 90 | | | | | | | | | |
| Embodiment 2 | Second polarizer | | 0 | | | | | | 1.03 | 0.99 | 77 | 0.13 |
| | Second birefringent layer | PMMA(-) | 0 | 87 | -11 | -0.1 | 1.05 | 0.98 | | | | |
| | VA liquid crystal cell | | | | 320 | | 1.05 | 0.97 | | | | |
| | Third birefringent layer | NB(+) | | 5 | 305 | | 1.00 | 1.00 | | | | |
| | First birefringent layer | NB(+) | 0 | 87 | 94 | 1.1 | 1.00 | 1.00 | | | | |
| | First polarizer | | 90 | | | | | | | | | |

(continued)

| | Optical components | Material (Δ n) | Angle [° ] | \|Rxy(550)\| [nm] | Rxz(550) [nm] | Nz(550) | α | β | α' | β' | CR (45,60) | ⊿E (45,60) |
|---|---|---|---|---|---|---|---|---|---|---|---|---|
| Embodiment 3 | Second polarizer | | 0 | | | | | | 1.03 | 0.99 | 75 | 0.14 |
| | Second birefringent layer | PMMA(-) | 0 | 83 | -17 | -0.2 | 1.05 | 0.98 | | | | |
| | VA liquid crystal cell | | | | 320 | | 1.05 | 0.97 | | | | |
| | Third birefringent layer | NE(+) | | 5 | 305 | | 1.00 | 1.00 | | | | |
| | First birefringent layer | NB(+) | 0 | 83 | 100 | 1.2 | 1.00 | 1.00 | | | | |
| | First polarizer | | 90 | | | | | | | | | |
| Embodiment 4 | Second polarizer | | 0 | | | | | | 1.03 | 0.99 | 72 | 0.17 |
| | Second birefringent layer | PMMA(-) | 0 | 72 | -44 | -0.6 | 1.05 | 0.98 | | | | |
| | VA liquid crystal cell | | | | 320 | | 1.05 | 0.97 | | | | |
| | Third birefringent layer | NB(+) | | 5 | 305 | | 1.00 | 1.00 | | | | |
| | First birefringent layer | NB(+) | 0 | 72 | 117 | 1.6 | 1.00 | 1.00 | | | | |
| | First polarizer | | 90 | | | | | | | | | |

(continued)

| | Optical components | Material (Δ n) | Angle [° ] | \|Rxy(550)\| [nm] | Rxz(550) [nm] | Nz(550) | α | β | α' | β' | CR (45,60) | ⊿E (45,60) |
|---|---|---|---|---|---|---|---|---|---|---|---|---|
| Embodiment 5 | Second polarizer | | 0 | | | | | | 1.03 | 0.99 | 70 | 0.18 |
| | Second birefringent layer | PMMA(-) | 0 | 65 | -66 | -1.0 | 1.05 | 0.98 | | | | |
| | VA liquid crystal cell | | | | 320 | | 1.05 | 0.97 | | | | |
| | Third birefringent layer | NB(+) | | 5 | 305 | | 1.00 | 1.00 | | | | |
| | First birefringent layer | NB(+) | 0 | 65 | 133 | 2.0 | 1.00 | 1.00 | | | | |
| | First polarizer | | 90 | | | | | | | | | |

(Embodiment 6)

The liquid crystal display device of Embodiment 6 according to the present invention is almost the same liquid crystal display device of Embodiment 1 except that the material of the second birefringent layer is changed. Table 5 shows the optical characteristics and axial designs of the birefringent films, the polarizers, and the liquid crystal cell of the present embodiment.

[Table 5]

| | Optical components | Material (Δ n) | Angle [° ] | \|Rxy(550)\| [nm] | Rxz(550) [nm] | Nz(550) | α | β | α' | β' | CR (45,60) | ⊿E (45,60) |
|---|---|---|---|---|---|---|---|---|---|---|---|---|
| Embodiment 6 | Second polarizer | | 0 | | | | | | 1.03 | 0.99 | 73 | 0.14 |
| | Second birefringent layer | NM(-) | 0 | 80 | -25 | -0.3 | 1.06 | 0.97 | | | | |
| | VA liquid crystal cell | | | | 320 | | 1.05 | 0.97 | | | | |
| | Third birefringent layer | NB(+) | | 5 | 305 | | 1.00 | 1.00 | | | | |
| | First birefringent layer | NB(+) | 0 | 80 | 100 | 1.3 | 1.00 | 1.00 | | | | |
| | First polarizer | | 90 | | | | | | | | | |

(Embodiment 7)

The liquid crystal display device of Embodiment 7 according to the present invention is almost the same liquid crystal display device of Embodiment 1 except that the material of the first birefringent layer is changed to a material showing reverse wavelength dispersibility. Table 6 shows the optical characteristics and axial designs of the birefringent films, the polarizers, and the liquid crystal cell of the present embodiment.

[Table 6]

| | Optical components | Material (Δ n) | Angle [° ] | \|Rxy(550)\| [nm] | Rxz(550) [nm] | Nz(550) | α | β | α' | β' | CR (45,60) | ⊿E (45,60) |
|---|---|---|---|---|---|---|---|---|---|---|---|---|
| Embodiment 7 | Second polarizer | | 0 | | | | | | 0.98 | 1.01 | 76 | 0.08 |
| | Second birefringent layer | PMMA(-) | 0 | 80 | -24 | -0.3 | 1.05 | 0.98 | | | | |
| | VA liquid crystal cell | | | | 320 | | 1.05 | 0.97 | | | | |
| | Third birefringent layer | NB(+) | | 5 | 305 | | 1.00 | 1.00 | | | | |
| | First birefringent layer | G(+) | 0 | 80 | 104 | 1.3 | 0.91 | 1.03 | | | | |
| | First polarizer | | 90 | | | | | | | | | |

(Embodiment 8)

The liquid crystal display device of Embodiment 8 according to the present invention is almost the same liquid crystal display device of Embodiment 1 except that the device satisfies $\Delta Nz1 < \Delta Nz2$ ($\Delta Nz1 = 0.1$, $\Delta Nz2 = 0.3$). Table 7 shows the optical characteristics and axial designs of the birefringent films, the polarizers, and the liquid crystal cell of the present embodiment.

[Table 7]

| | Optical components | Material (Δ n) | Angle [°] | \|Rxy(550)\| [nm] | Rxy(550) [nm] | Nz(550) ) | α | β | α' | β' | CR (45,60) | ⊿E (45,60) |
|---|---|---|---|---|---|---|---|---|---|---|---|---|
| Embodiment 8 | Second polarizer | | 0 | | | | | | 1.03 | 0.99 | 72 | 0.17 |
| | Second birefringent layer | PMMA(-) | 0 | 70 | -20 | -0.3 | 1.05 | 0.98 | | | | |
| | VA liquid crystal cell | | | | 320 | | 1.05 | 0.97 | | | | |
| | Third birefringent layer | NB(+) | | 5 | 305 | | 1.00 | 1.00 | | | | |
| | First birefringent layer | NB(+) | 0 | 102 | 117 | 1.1 | 1.00 | 1.00 | | | | |
| | First polarize | | 90 | | | | | | | | | |

(Embodiment 9)

The liquid crystal display device of Embodiment 9 according to the present invention is almost the same liquid crystal display device of Embodiment 1 except that the device satisfies $\Delta Nz1 > \Delta Nz2$ ($\Delta Nz1 = 0.3$, $\Delta Nz2 = 0.1$). Table 8 shows the optical characteristics and axial designs of the birefringent films, the polarizers, and the liquid crystal cell of the present embodiment.

[Table 8]

| | Optical components | Material (Δn) | Angle [° ] | \|Rxy(550)\| [nm] | Rxz(550) [nm] | Nz(550) | α | β | α' | β' | CR (45,60) | ⊿E (45,60) |
|---|---|---|---|---|---|---|---|---|---|---|---|---|
| Embodiment 9 | Second polarizer | | 0 | | | | | | 1.03 | 0.99 | 71 | 0.16 |
| | Second birefringent layer | PMMA(-) | 0 | 120 | -10 | -0.1 | 1.05 | 0.98 | | | | |
| | VA liquid crystal cell | | | | 320 | | 1.05 | 0.97 | | | | |
| | Third birefringent layer | NB(+) | | 5 | 305 | | 1.00 | 1.00 | | | | |
| | First birefringent layer | NB(+) | 0 | 70 | 90 | 1.3 | 1.00 | 1.00 | | | | |
| | First polarizer | | 90 | | | | | | | | | |

(Embodiment 10)

In the liquid crystal display device of Embodiment 10 according to the present invention, the ΔNz1 of the first birefringent layer is made higher than that of Embodiment 9. Table 9 shows the optical characteristics and axial designs of the birefringent films, the polarizers, and the liquid crystal cell of the present embodiment.
[Table 9]

<table>
<tr><th></th><th>Optical components</th><th>Material (Δ n)</th><th>Angle [° ]</th><th>|Rxy(550)| [nm]</th><th>Pxz(550) [nm]</th><th>Nz(550)</th><th>α</th><th>β</th><th>α'</th><th>β'</th><th>CR (45,60)</th><th>⊿E (45,60)</th></tr>
<tr><td rowspan="6">Embodiment 10</td><td>Second polarizer</td><td></td><td>0</td><td></td><td></td><td></td><td></td><td></td><td rowspan="6">1.03</td><td rowspan="6">0.99</td><td rowspan="6">69</td><td rowspan="6">0.17</td></tr>
<tr><td>Second birefringent layer</td><td>PMMA(-)</td><td>0</td><td>110</td><td>-10</td><td>-0.1</td><td>1.05</td><td>0.98</td></tr>
<tr><td>VA liquid crystal cell</td><td></td><td></td><td></td><td>320</td><td></td><td>1.05</td><td>0.97</td></tr>
<tr><td>Third birefringent layer</td><td>NB(+)</td><td></td><td>5</td><td>305</td><td></td><td>1.00</td><td>1.00</td></tr>
<tr><td>First birefringent layer</td><td>NB(+)</td><td>0</td><td>60</td><td>92</td><td>1.5</td><td>1.00</td><td>1.00</td></tr>
<tr><td>First polarizer</td><td></td><td>90</td><td></td><td></td><td></td><td></td><td></td></tr>
</table>

(Embodiment 11)

The liquid crystal display device of Embodiment 11 according to the present invention is almost the same liquid crystal display device of Embodiment 10 except that the material of the first birefringent layer is changed to a material showing reverse wavelength dispersibility. Table 10 shows the optical characteristics and axial designs of the birefringent films, the polarizers, and the liquid crystal cell of the present embodiment.

[Table 10]

| | Optical components | Material (Δ n) | Angle [°] | \|Rxy(550)\| [nm] | Rxz(550) [nm] | Nz(550) | α | β | α' | β' | CR (45,60) | ⊿E (45,60) |
|---|---|---|---|---|---|---|---|---|---|---|---|---|
| Embodiment 11 | Second polarizer | | 0 | | | | | | 0.98 | 1.01 | 77 | 0.09 |
| | Second birefringent layer | PMMA(-) | 0 | 110 | -10 | -0.1 | 1.05 | 0.98 | | | | |
| | VA liquid crystal cell | | | | 320 | | 1.05 | 0.97 | | | | |
| | Third birefringent layer | NB(+) | | 5 | 305 | | 1.00 | 1.00 | | | | |
| | First birefringent layer | G(+) | 0 | 60 | 90 | 1.5 | 0.91 | 1.03 | | | | |
| | First polarizer | | 90 | | | | | | | | | |

(Embodiment 12)

The liquid crystal display device of Embodiment 12 according to the present invention is almost the same liquid crystal display device of Embodiment 1 except that the material of the second birefringent layer is changed to a material with positive intrinsic birefringence. Table 11 shows the optical characteristics and axial designs of the birefringent films, the polarizers, and the liquid crystal cell of the present embodiment.

[Table 11]

| | Optical components | Material (Δ n) | Angle [° ] | \|Rxy(550)\| [nm] | Rxz(550) [nm] | Nz(550) | α | β | α' | β' | CR (45,60) | ⊿E (45,60) |
|---|---|---|---|---|---|---|---|---|---|---|---|---|
| Embodiment 12 | Second polarizer | | 0 | | | | | | 1.00 | 1.00 | 76 | 0.11 |
| | Second birefringent layer | NB(+) | 0 | 80 | -24 | -0.3 | 1.00 | 1.00 | | | | |
| | VA liquid crystal cell | | | 0 | 320 | | 1.05 | 0.97 | | | | |
| | Third birefringent layer | NB(+) | | 5 80 | 305 | | 1.00 | 1.00 | | | | |
| | First birefringent layer | NB(+) | 0 | | 104 | 1.3 | 1.00 | 1.00 | | | | |
| | First polarizer | | 90 | | | | | | | | | |

(Embodiment 13)

The liquid crystal display device of Embodiment 13 according to the present invention is almost the same liquid crystal display device of Embodiment 12 except that the material of the first birefringent layer is changed to a material showing reverse wavelength dispersibility. Table 12 shows the optical characteristics and axial designs of the birefringent films, the polarizers, and the liquid crystal cell of the present embodiment.

[Table 12]

| | Optical components | Material (△n) | Angle [° ] | \|Rxy(550)\| [nm] | Rxz(550) [nm] | Nz(550) | α | β | α' | β' | CR (45,60) | ⊿E (45,60) |
|---|---|---|---|---|---|---|---|---|---|---|---|---|
| Embodiment 13 | Second polarizer | | 0 | | | | | | 0.96 | 1.02 | 72 | 0.08 |
| | Second birefringent layer | NB(+) | 0 | 80 | -24 | -0.3 | 1.00 | 1.00 | | | | |
| | VA liquid crystal cell | | | | 320 | | 1.05 | 0.97 | | | | |
| | Third birefringent layer | NB(+) | | 5 | 305 | | 1.00 | 1.00 | | | | |
| | First birefringent layer | G(+) | 0 | 80 | 104 | 1.3 | 0.91 | 1.03 | | | | |
| | First polarizer | | 90 | | | | | | | | | |

(Embodiment 14)

The liquid crystal display device of Embodiment 14 according to the present invention is almost the same liquid crystal display device of Embodiment 12 except that the material of the second birefringent layer is changed to a material showing reverse wavelength dispersibility. Table 13 shows the optical characteristics and axial designs of the birefringent films, the polarizers, and the liquid crystal cell of the present embodiment.

[Table 13]

| | Optical components | Material (△n) | Angle [° ] | \|Rxy(550)\| [nm] | Rxz(550) [nm] | Nz(550) | α | β | α' | β' | CR (45,60) | ⊿E (45,60) |
|---|---|---|---|---|---|---|---|---|---|---|---|---|
| Embodiment 14 | Second polarizer | | 0 | | | | | | 0.96 | 1.02 | 71 | 0.07 |
| | Second birefringent layer | G(+) | 0 | 80 | -24 | -0.3 | 0.91 | 1.03 | | | | |
| | VA liquid crystal cell | | | | 320 | | 1.05 | 0.97 | | | | |
| | Third birefringent layer | NB(+) | 5 | | 305 | | 1.00 | 1.00 | | | | |
| | First birefringent layer | NB(+) | 0 | 80 | 104 | 1.3 | 1.00 | 1.00 | | | | |
| | First polarizer | | 90 | | | | | | | | | |

(Embodiment 15)

The liquid crystal display device of Embodiment 15 according to the present invention is almost the same liquid crystal display device of Embodiment 12 except that the materials of the first and second birefringent layers each are changed to a material showing reverse wavelength dispersibility. Table 14 shows the optical characteristics and axial designs of the birefringent films, the polarizers, and the liquid crystal cell of the present embodiment.

[Table 14]

| | Optical components | Material (△n) | Angle [° ] | \|Rxy(550)\| [nm] | Rxz(550) [nm] | Nz(550) | α | β | α' | β' | CR (45,60) | ⊿E (45,60) |
|---|---|---|---|---|---|---|---|---|---|---|---|---|
| Embodiment 15 | Second polarizer | | 0 | | | | | | 0.91 | 1.03 | 74 | 0.03 |
| | Second birefringent layer | G(+) | 0 | 80 | -24 | -0.3 | 0.91 | 1.03 | | | | |
| | VA liquid crystal cell | | | | 320 | | 1.05 | 0.97 | | | | |
| | Third birefringent layer | NB(+) | | 5 | 305 | | 1.00 | 1.00 | | | | |
| | First birefringent layer | G(+) | 0 | 80 | 104 | 1.3 | 0.91 | 1.03 | | | | |
| | First polarizer | | 90 | | | | | | | | | |

(Comparative Embodiment 1)

Fig. 3 is a perspective view that schematically shows the structure of the liquid crystal display device of Comparative Embodiment 1.
As shown in Fig. 3, the liquid crystal display device of Comparative Embodiment 1 is a VA liquid crystal display device 200b produced by stacking a TAC film 10b, a first polarizer 11b, a TAC film 20b, a VA liquid crystal cell 50b, a TAC film 30b, a second polarizer 12b, and a TAC film 40b, in this order. Table 15 shows the optical characteristics and axial designs of the birefringent films, the polarizers, and the liquid crystal cell of the present comparative embodiment.

(Comparative Embodiment 2)

Fig. 4 is a perspective view that schematically shows the structure of the liquid crystal display device of Comparative Embodiment 2.
As shown in Fig. 4, the liquid crystal display device of Comparative Embodiment 2 is a VA liquid crystal display device 200c produced by stacking a TAC film 10c, a first polarizer 11c, a biaxial retardation film 60c, a VA liquid crystal cell 50c, a TAC film 20c, a second polarizer 12c, and a TAC film 30c, in this order. Table 15 shows the optical characteristics and axial designs of the birefringent films, the polarizers, and the liquid crystal cell of the present comparative embodiment.

(Comparative Embodiment 3)

Fig. 5 is a perspective view that schematically shows the structure of the liquid crystal display device of Comparative Embodiment 3.
As shown in Fig. 5, the liquid crystal display device of Comparative Embodiment 3 is a VA liquid crystal display device 200d produced by stacking a TAC film 10d, a first polarizer 11d, a first biaxial retardation film 60d, a VA liquid crystal cell 50d, a second biaxial retardation film 61d, a second polarizer 12d, and a TAC film 20d, in this order. Table 15 shows the optical characteristics and axial designs of the birefringent films, the polarizers, and the liquid crystal cell of the present comparative embodiment.
[Table 15]

| | Optical components | Material (△n) | Angle [° ] | \|Rxy(550)\| [nm] | Rxz(550) [nm] | Nz(550) nm] | α | β | α' | β' | CR (45,60) | ⊿E (45,60) |
|---|---|---|---|---|---|---|---|---|---|---|---|---|
| | Second polarizer | | 0 | | | | | | | | | |
| | TAC film | TAC(+) | | 1 | 55 | | 0.81 | 1.11 | | | | |
| Comparative Embodiment 1 | VA liquid crystal cell | | | 0 | 320 | | 1.05 | 0.97 | | | 20 | 0.10 |
| | TAC film | TAC(+) | | 1 | 55 | | 0.81 | 1.11 | | | | |
| | First polarizer | | 90 | | | | | | | | | |
| | Second polarizer | | 0 | | | | | | | | | |
| | TAC film | TAC(+) | 0 | 1 | 55 | | 0.81 | 1.11 | | | | |
| Comparative Embodiment 2 | VA liquid crystal cell | | | 0 | 320 | | 1.05 | 0.97 | | | 70 | 0.22 |
| | Biaxial retardation film | NB(+) | 0 | 60 | 250 | | 1.00 | 1.00 | | | | |
| | First polarizer | | 90 | | | | | | | | | |

(continued)

| | Optical components | Material (△n) | Angle [° ] | \|Rxy(550)\| [nm] | Rxz(550) [nm] | Nz(550) nm] | α | β | α' | β' | CR (45,60) | ⊿E (45,60) |
|---|---|---|---|---|---|---|---|---|---|---|---|---|
| | Second polarizer | | 0 | | | | | | | | | |
| | Biaxial retardation film | NB(+) | 90 | 55 | 120 | | 1.00 | 1.00 | | | | |
| Comparative Embodiment 3 | VA liquid crystal cell | | | 0 | 320 | | 1.05 | 0.97 | | | 75 | 0.18 |
| | Biaxial retardation film | NB(+) | 0 | 55 | 120 | | 1.00 | 1.00 | | | | |
| | First polarizer | | 90 | | | | | | | | | |

(Reference Embodiment 1)

Fig. 6 is a perspective view that schematically shows the structure of the liquid crystal display device of Reference Embodiment 1.
As shown in Fig. 6, the liquid crystal display device of Reference Embodiment 1 is a VA liquid crystal display device 200e produced by stacking a TAC film 10e, a first polarizer 11e, a negative C plate 23e, a VA liquid crystal cell 50e, a positive A plate 21e, a second polarizer 12e, and a TAC film 20e, in this order. Table 16 shows the optical characteristics and axial designs of the birefringent films, the polarizers, and the liquid crystal cell of the present reference embodiment.

(Reference Embodiment 2)

Fig. 7 is a perspective view that schematically shows the structure of the liquid crystal display device of Reference Embodiment 2.
As shown in Fig. 7, the liquid crystal display device of Reference Embodiment 2 is a VA liquid crystal display device 200f produced by stacking a TAC film 10f, a first polarizer 11f, a negative C plate 23f, a VA liquid crystal cell 50f, a positive C plate 25f, a positive A plate 21f, a second polarizer 12f, and a TAC film 20f, in this order. Table 16 shows the optical characteristics and axial designs of the birefringent films, the polarizers, and the liquid crystal cell of the present reference embodiment.

(Reference Embodiment 3)

Fig. 8 is a perspective view that schematically shows the structure of the liquid crystal display device of Reference Embodiment 3.
As shown in Fig. 8, the liquid crystal display device of Reference Embodiment 3 is a VA liquid crystal display device 200g produced by stacking a TAC film 10g, a first polarizer 11g, a negative C plate 23g, a VA liquid crystal cell 50g, three biaxial retardation films 60g to 62g, a second polarizer 12g, and a TAC film 20g, in this order. Table 16 shows the optical characteristics and axial designs of the birefringent films, the polarizers, and the liquid crystal cell of the present reference embodiment.
[Table 16]

| | Optical components | Material (△n) | Angle [° ] | \|Rxy(550)\| [nm] | Rxz(550) [nm] | Nz(550) | α | β | α' | β' | CR (45,60) | ⊿E (45,60) |
|---|---|---|---|---|---|---|---|---|---|---|---|---|
| Reference Embodiment 1 | Second polarizer | | 0 | | | | | | | | 75 | 0.03 |
| | Reverse dispersion A plate | G(+) | 90 | 130 | 169 | 1.3 | 0.91 | 1.03 | | | | |
| | VA liquid crystal cell | | | 0 | 320 | | 1.05 | 0.97 | | | | |
| | Normal dispersion-C plate | ChLC(-) | 0 | 5 | 180 | 36.0 | 1.03 | 0.99 | | | | |
| | First polarizer | | 90 | | | | | | | | | |
| Reference Embodiment 2 | Second polarizer | | 0 | | | | | | | | 77 | 0.03 |
| | Reverse dispersion A plate | G(+) | 0 | 130 | 169 | 1.3 | 0.91 | 1.03 | | | | |
| | Reverse dispersion +C plate | G(+) | 0 | 2 | 100 | 50.0 | | | | | | |
| | VA liquid crystal cell | | | 0 | 320 | | 1.05 | 0.97 | | | | |
| | Normal dispersion -C plate | ChLC(-) | 0 | 0 | 310 0 | | 1.04 | 0.97 | | | | |
| | First polarizer | | 90 | | | | | | | | | |

(continued)

| | Optical components | Material (△n) | Angle [° ] | \|Rxy(550)\| [nm] | Rxz(550) [nm] | Nz(550) | α | β | α' | β' | CR (45,60) | ⊿E (45,60) |
|---|---|---|---|---|---|---|---|---|---|---|---|---|
| Reference Embodiment 3 | Second polarizer | | 0 | | | | | | | | 80 | 0.02 |
| | Biaxial retardation film | G(+) | 0 | 90 | 43 | 0.5 | 0.91 | 1.03 | | | | |
| | Biaxial retardation film | G(+) | 0 | 90 | 43 | 0.5 | 0.91 | 1.03 | | | | |
| | Biaxial retardation film | G(+) | 0 | 90 | 43 | 0.5 | 0.91 | 1.03 | | | | |
| | VA liquid crystal cell | | | 0 | 320 | | 1.05 | 0.97 | | | | |
| | Normal dispersion -C plate | ChLC(-) | 0 | 0 | 310 | | 1.04 | 0.97 | | | | |
| | First polarizer | | 90 | | | | | | | | | |

(Evaluation results)

The viewing angle dependence of contrast and the viewing angle dependence of chromaticity of the liquid crystal display device were determined in each embodiment, and the CR (45, 60) and the ΔE (45, 60) were shown in Tables 4 to 16.
The liquid crystal display device in each of Embodiments 1 to 15 according to the present invention had a CR (45, 60) equivalent to or higher than that in each of Comparative Embodiments 1 to 3. Even in the visual evaluation, the liquid crystal display device in each of Embodiments 1 to 15 had viewing angle dependence of contrast equivalent to or higher than that in each of Comparative Embodiments 1 to 3. In the liquid crystal display device of Embodiment 1 according to the present invention, the ΔE (45, 60) was lower than that in each of Comparative Embodiments 2 and 3 in which the CR (45, 60) was similar to that therein. Even in the visual evaluation, a change in the viewing angle seemed to cause a small change in the chromaticity, and the liquid crystal display device of Embodiment 1 had better viewing angle dependence of chromaticity than those of Comparative Embodiments 1 to 3.
The liquid crystal display device in each of Reference Embodiments 1 to 3 had a ΔE (45, 60) much lower than that of the liquid crystal display device in Embodiment 1 according to the present invention, and had better viewing angle dependence of chromaticity than that thereof. However, these liquid crystal display devices each comprise a difficult-to-produce retardation film selected from a positive C plate, a biaxial retardation film with Nz ≈ 0.5, and a retardation film with reverse wavelength dispersion having a retardation |Rxy(550)| of 118 nm or larger.
Further, in the liquid crystal display devices in each of Embodiments 1 to 11 according to the present invention, the first birefringent layer included a material with positive intrinsic birefringence and the second birefringent layer included a material with negative intrinsic birefringence. In addition, the first polarizer and the first birefringent layer, and the second polarizer and the second birefringent layer were allowed to be bonded by roll-to-roll processing. Thus, the number of protecting films such as a TAC film was reduced, and as a result, the performance and the productivity of the liquid crystal display device were improved.
The present application claims priority to Patent Application No. 2008-27998 filed in Japan on February 7, 2008 under the Paris Convention and provisions of national law in a designated State. The entire contents of which are hereby incorporated by reference.

BRIEF DESCRIPTION OF THE DRAWINGS

Fig. 1 is a perspective view that schematically shows the structure of the liquid crystal display device of Embodiment 1.
Fig. 2 is a view schematically showing a part of the production procedure for the liquid crystal display device of Embodiment 1;
Fig. 2(a) shows a step of laterally stretching a raw film for a first birefringent layer to produce the first birefringent layer;
Fig. 2(b) shows a step of longitudinally stretching a raw film for a first polarizer to produce the first polarizer, and bonding the first polarizer and a TAC film by roll-to-roll processing;
Fig. 2(c) shows a step of bonding the first polarizer with the TAC film bonded thereto and the first birefringent layer through roll-to-toll processing;
Fig. 2(d) shows a step of laterally stretching a raw film for a second birefringent layer to produce the second birefringent layer;
Fig. 2(e) shows a step of longitudinally stretching a raw film for a second polarizer to produce the second polarizer, and bonding the second polarizer and a TAC film by roll-to-roll processing; and
Fig. 2(f) shows a step of bonding the second polarizer with the TAC film bonded thereto and the second birefringent layer through roll-to-toll processing.
Fig. 3 is a perspective view that schematically shows the structure of the liquid crystal display device of Comparative Embodiment 1.
Fig. 4 is a perspective view that schematically shows the structure of the liquid crystal display device of Comparative Embodiment 2.
Fig. 5 is a perspective view that schematically shows the structure of the liquid crystal display device of Comparative Embodiment 3.
Fig. 6 is a perspective view that schematically shows the structure of the liquid crystal display device of Reference Embodiment 1.
Fig. 7 is a perspective view that schematically shows the structure of the liquid crystal display device of Reference Embodiment 2.
Fig. 8 is a perspective view that schematically shows the structure of the liquid crystal display device of Reference Embodiment 3.

Fig. 9 is a cross-sectional view that schematically shows the structure of a conventional liquid crystal display device.
Fig. 10 is a cross-sectional view that schematically shows the structure of a conventional liquid crystal display device.
Fig. 11 is a cross-sectional view that schematically shows one example of the structure of the liquid crystal display device according to the present invention.
Fig. 12 is a perspective view that schematically shows one aspect in which the optic axis of a polarizer and the optic axis of a birefringent layer are parallel to each other;
Fig. 12(a) is a view from the front direction; and
Fig. 12(b) is a view from an oblique direction.
Fig. 13 is a perspective view that schematically shows a structure in which the optic axis of a polarizer and the optic axis of a birefringent layer are orthogonal to each other;
Fig. 13(a) is a view from the front direction; and
Fig. 13(b) is a view from an oblique direction.
Fig. 14 is a graph that shows the relationship between $\Delta Nz1$, $\Delta Nz2$, and the optimum $|Rxy(550)|$ in the case of $\Delta Nz1 = \Delta Nz2$. "■" represents the first birefringent layer, and "△" represents the second birefringent layer.
Fig. 15 is a graph that shows the relationship between $\Delta Nz1$, $\Delta Nz2$, and the optimum $|Rxy(550)|$ in the case of $\Delta Nz1 = 0$ and $0 < \Delta Nz2$. "■" represents the first birefringent layer, and "△" represents the second birefringent layer.
Fig. 16 is a graph that shows the relationship between $\Delta Nz1$, $\Delta Nz2$, and the optimum $|Rxy(550)|$ in the case of $\Delta Nz2 = 0$ and $0 < \Delta Nz1$. "■" represents the first birefringent layer, and "△" represents the second birefringent layer.

EXPLANATION OF SYMBOLS

1a to 1g: Back-side substrate
2a to 2g: Viewing-side substrate
3a to 3g: Liquid crystal molecule
5: Adhesive
7: Pressure-sensitive adhesive
8: Polarizer
9: Birefringent Layer
10, 10a to 10g, 20a to 20g, 30b, 30c, 40b: TAC film (protecting film)
11, 11a to 11g: First polarizer
12, 12a to 12g: Second polarizer
21, 21a to 21f: First birefringent layer
22, 22a: Second birefringent layer
23a to 23g: Third birefringent layer
24: Isotropic Film (zero-retardation Protecting film)
25f: Positive C plate
50a to 50g: VA liquid crystal cell
60c to 60g, 61d, 61g, 62g: Biaxial retardation film
71, 72: Unit for imparting retardation function
71a: Raw film for first birefringent Layer
72a: Raw film for second birefringent Layer
73, 77: Unit for imparting polarization function
73a: Raw film for first polarizer
74, 76, 78, 79: Adhesive-applying unit
75a to 75d: Bonding unit
77a: Raw film for second polarizer
80a: First polarizing plate
81a: Second polarizing plate
90: First polarizer with TAC film bonded thereto
91: First polarizer with TAC film and first birefringent Layer bonded thereto
92: Second polarizer with TAC film bonded thereto
100a, 200b to 200g: VA liquid crystal display device a: Absorption axis of polarizer
a (o): Absorption axis of polarizer (optic axis of polarizer)
e1 (o): Eigenmode (optic axis of birefringent layer)
e2: Eigenmode
L: Longitudinal axis of liquid crystal molecule

s: Slow axis
t: Transmission axis of polarizer

## Claims

1. A method for producing a liquid crystal display device including a first polarizer, a first birefringent layer, a liquid crystal cell, a second birefringent layer, and a second polarizer in this order, wherein absorption axes of the first polarizer and the second polarizer are orthogonal to each other; the first birefringent layer includes a material with positive intrinsic birefringence; and the second birefringent layer includes a material with negative intrinsic birefringence,
the method comprising at least one of the following first and second steps,
the first step including:

    longitudinally stretching a raw film for the first polarizer to produce the first polarizer;
    laterally stretching a raw film for the first birefringent layer to produce the first birefringent layer; and
    bonding the first polarizer and the first birefringent layer by roll-to-roll processing, and

   the second step including:

    longitudinally stretching a raw film for the second polarizer to produce the second polarizer;
    laterally stretching a raw film for the second birefringent layer to produce the second birefringent layer; and
    bonding the second polarizer and the second birefringent layer by roll-to-roll processing.

2. The method for producing a liquid crystal display device according to claim 1,
wherein
the first birefringent layer satisfies $1.1 \leq Nz(550) \leq 2$ and has an in-plane slow axis forming an angle of 90° with the absorption axis of the first polarizer, and
the second birefringent layer satisfies $-1 \leq Nz(550) \leq -0.1$ and has an in-plane slow axis forming an angle of 0° with the absorption axis of the second polarizer.

3. A liquid crystal display device, comprising in the following order:

    a first polarizer;
    a first birefringent layer;
    a liquid crystal cell;
    a second birefringent layer; and
    a second polarizer,
    wherein absorption axes of the first polarizer and the second polarizer are orthogonal to each other;
    the first birefringent layer satisfies $1.1 \leq Nz(550) \leq 2$ and has an in-plane slow axis orthogonal to the absorption axis of the first polarizer; and
    the second birefringent layer satisfies $-1 \leq Nz(550) \leq -0.1$ and has an in-plane slow axis parallel to the absorption axis of the second polarizer.

4. The liquid crystal display device according to claim 3,
wherein the first birefringent layer includes a material with positive intrinsic birefringence.

5. The liquid crystal display device according to claim 3 or 4,
wherein the second birefringent layer includes a material with negative intrinsic birefringence.

6. The liquid crystal display device according to any one of claims 3 to 5,
wherein the liquid crystal display device satisfies $0 \leq Nz'(550) \leq 1$, wherein $Nz'(550)$ represents an arithmetic mean between $Nz(550)$ of the first birefringent layer and $Nz(550)$ of the second birefringent layer.

7. The liquid crystal display device according to claim 6,
wherein the liquid crystal display device satisfies $0.3 \leq Nz'(550) \leq 0.7$.

8. The liquid crystal display device according to any one of claims 3 to 7,

wherein at least one of the first birefringent layer and the second birefringent layer satisfies $|Rxy(550)| \leq 130$ nm.

**9.** The liquid crystal display device according to claim 8,
wherein the liquid crystal display device satisfies $\Delta Nz1 = \Delta Nz2$, wherein $\Delta Nz1$ represents a biaxial parameter of the first birefringent layer defined as $|Nz(550)-1|$ and $\Delta Nz2$ represents a biaxial parameter of the second birefringent layer defined as $|Nz(550)|$.

**10.** The liquid crystal display device according to claim 8,
wherein the liquid crystal display device satisfies $\Delta Nz1 < \Delta Nz2$, wherein $\Delta Nz1$ represents a biaxial parameter of the first birefringent layer defined as $|Nz(550)-1|$ and $\Delta Nz2$ represents a biaxial parameter of the second birefringent layer defined as $|Nz(550)|$.

**11.** The liquid crystal display device according to claim 8,
wherein the liquid crystal display device satisfies $\Delta Nz1 > \Delta Nz2$, wherein $\Delta Nz1$ represents a biaxial parameter of the first birefringent layer defined as $|Nz(550)-1|$ and $\Delta Nz2$ represents a biaxial parameter of the second birefringent layer defined as $|Nz(550)|$.

**12.** The liquid crystal display device according to any one of claims 3 to 11,
wherein at least one of the first birefringent layer and the second birefringent layer satisfies $|Rxy(450)| \leq |Rxy(550)| \leq |Rxy(650)|$.

**13.** The liquid crystal display device according to any one of claims 3 to 12,
wherein the liquid crystal display device satisfies $\alpha' \leq 1$ and $1 \leq \beta'$, wherein $\alpha'$ represents an arithmetic mean between a wavelength dispersibility of the first birefringent layer $\alpha 1 = Rxy(450)/Rxy(550)$ and a wavelength dispersibility of the second birefringent layer $\alpha 2 = Rxy(450)/Rxy(550)$, and $\beta'$ represents an arithmetic mean between a wavelength dispersibility of the first birefringent layer $\beta 1 = Rxy(650)/Rxy(550)$ and a wavelength dispersibility of the second birefringent layer $\beta 2 = Rxy(650)/Rxy(550)$ .

**14.** The liquid crystal display device according to any one of claims 3 to 13, further comprising
a third birefringent layer,
wherein the liquid crystal display device displays a black screen by aligning liquid crystal molecules in the liquid crystal cell perpendicular to a substrate surface; and
the third birefringent layer is disposed between the first polarizer and the second polarizer and satisfies $Rxy \leq 10$ nm and $Rxz \geq 100$ nm.

**15.** The liquid crystal display device according to claim 14,
wherein the third birefringent layer is disposed adjacent to the liquid crystal cell.

Fig. 1

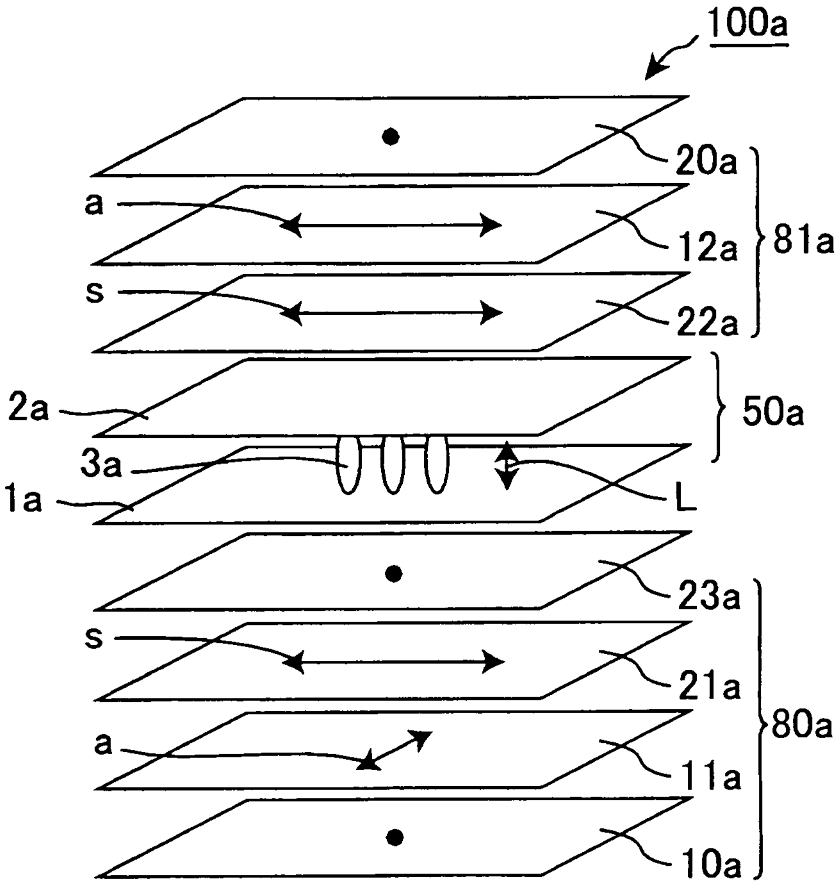

Fig. 2

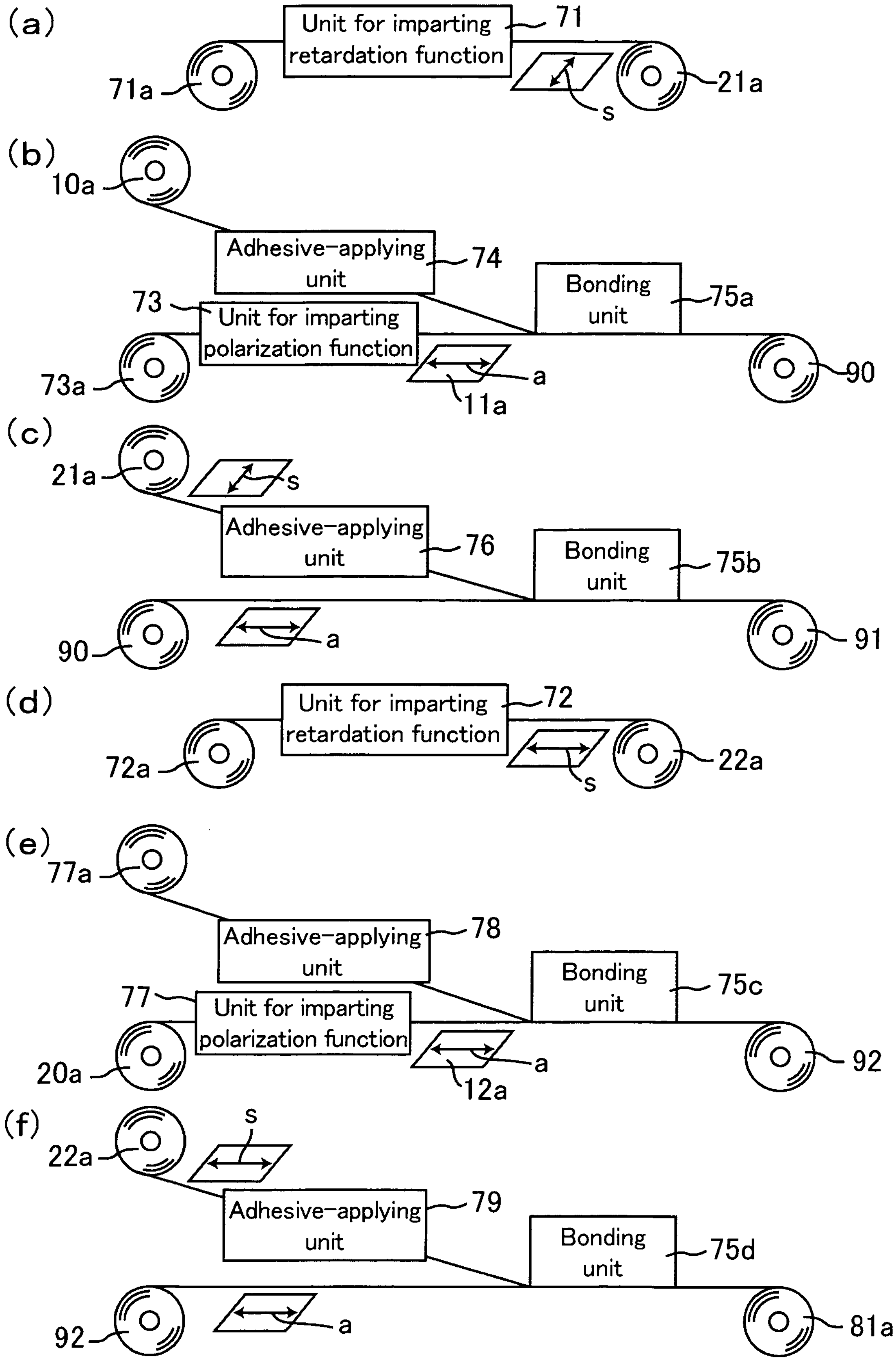
(a)
Unit for imparting retardation function
71
71a
21a
s
(b)
10a
Adhesive-applying unit
74
Bonding unit
75a
73
Unit for imparting polarization function
73a
a
11a
90
(c)
21a
s
Adhesive-applying unit
76
Bonding unit
75b
90
a
91
(d)
Unit for imparting retardation function
72
72a
22a
s
(e)
77a
Adhesive-applying unit
78
Bonding unit
75c
77
Unit for imparting polarization function
20a
a
12a
92
(f)
22a
s
Adhesive-applying unit
79
Bonding unit
75d
92
a
81a

Fig. 3

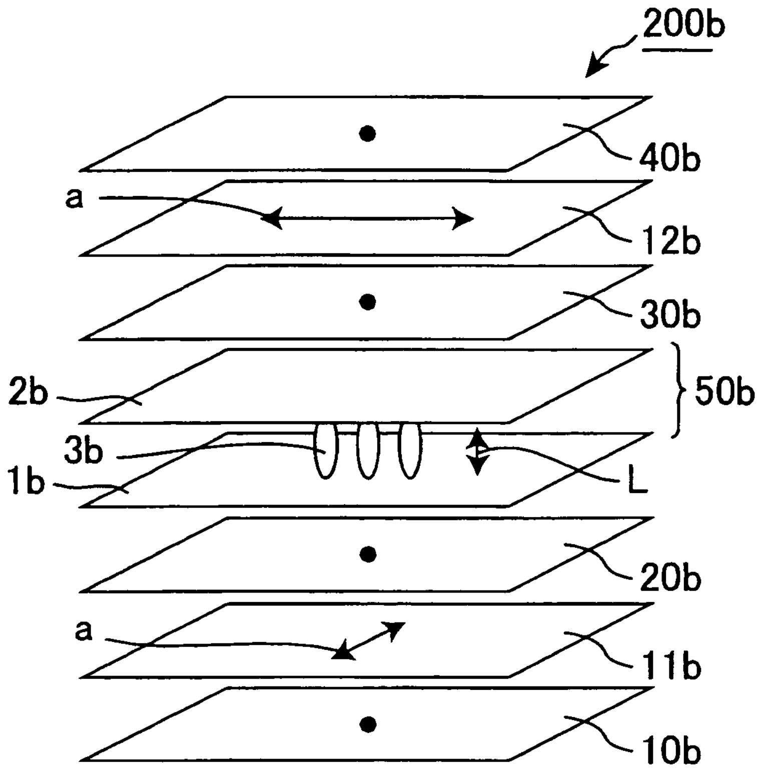
200b
40b
a
12b
30b
2b
50b
3b
1b
L
20b
a
11b
10b

Fig. 4

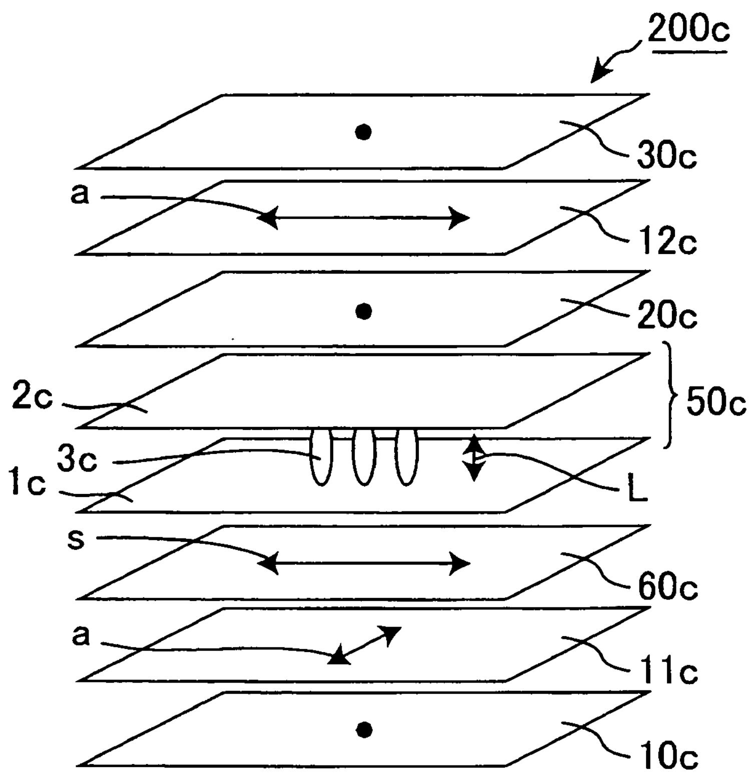
200c
30c
a
12c
20c
2c
50c
3c
1c
L
s
60c
a
11c
10c

Fig. 5

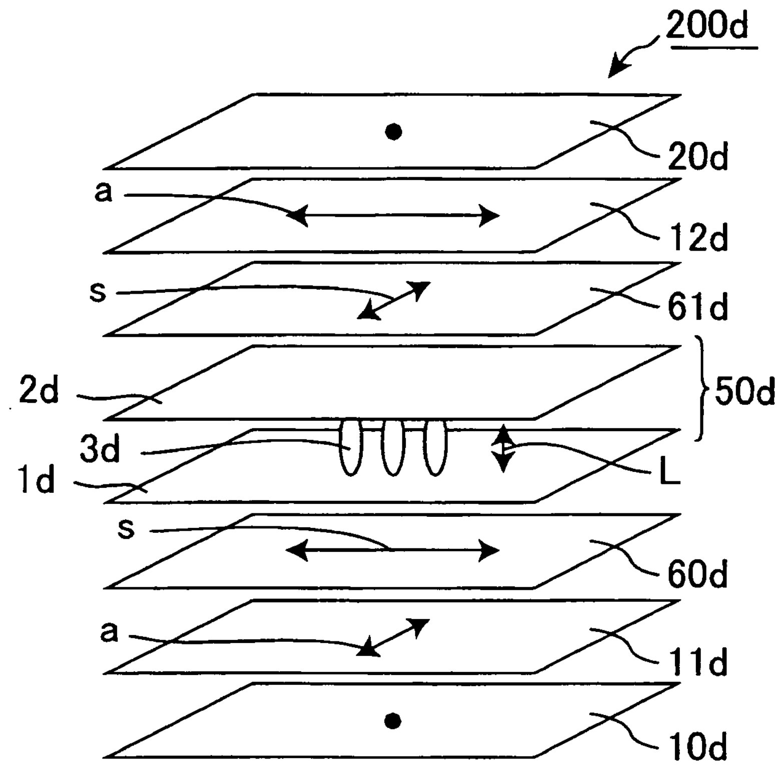
200d
20d
a
12d
s
61d
2d
50d
3d
1d
L
s
60d
a
11d
10d

Fig. 6

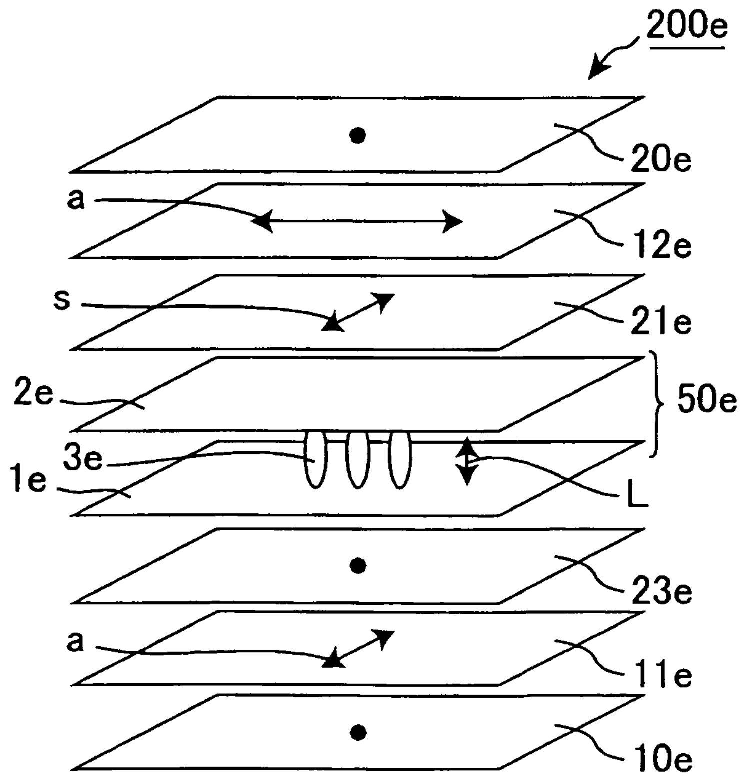
200e
20e
a
12e
s
21e
2e
50e
3e
1e
L
23e
a
11e
10e

Fig. 7

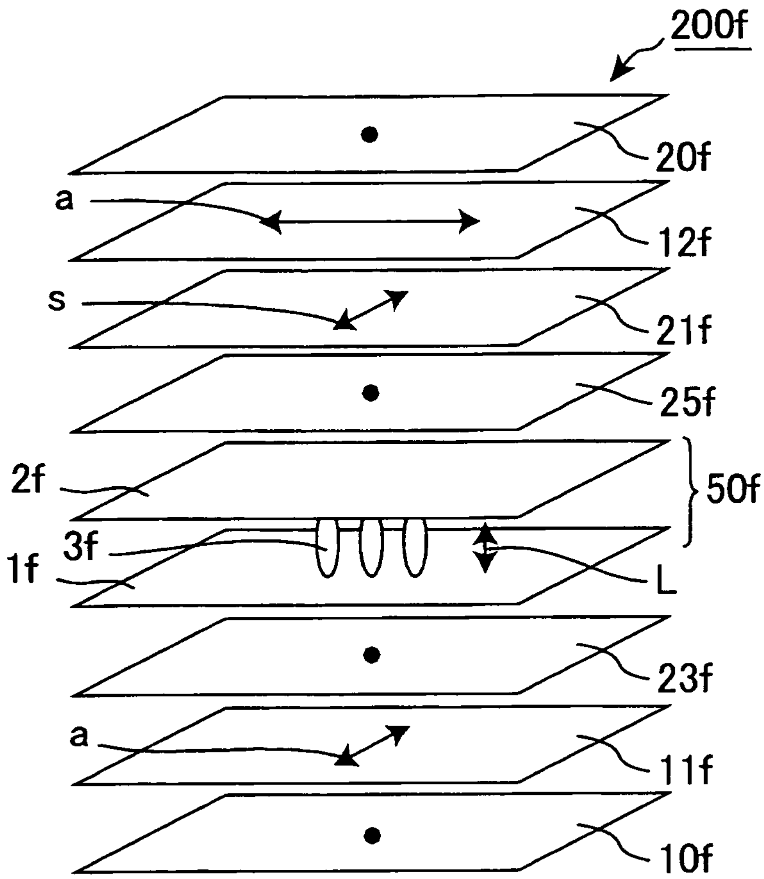

Fig. 8

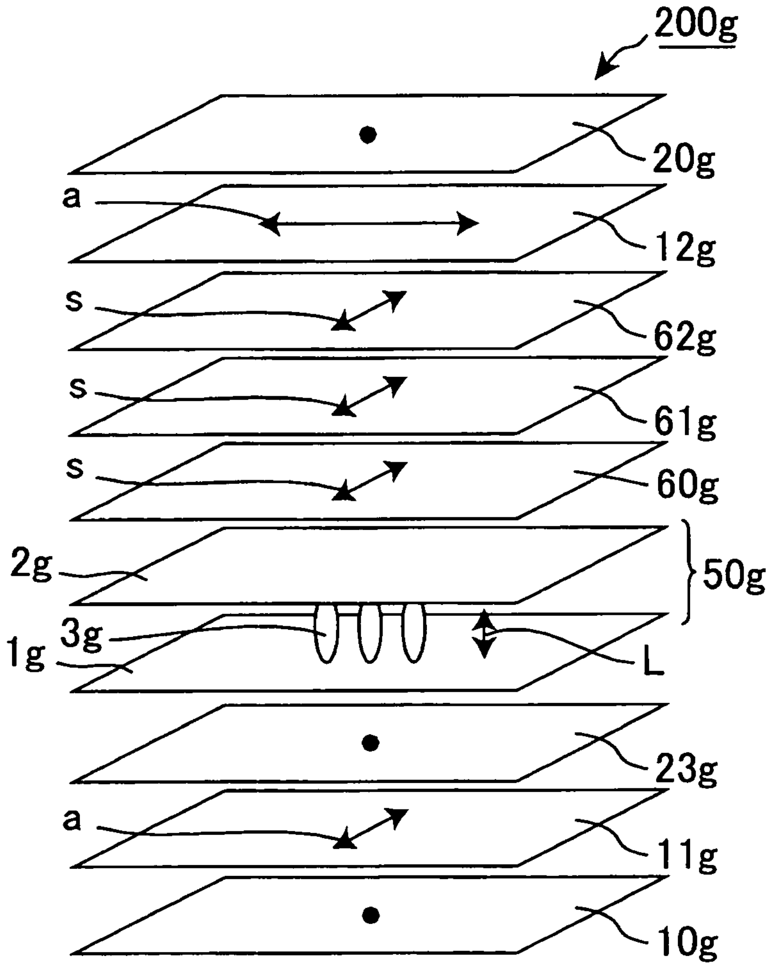
200g
20g
a
12g
s
62g
s
61g
s
60g
2g
50g
3g
1g
L
23g
a
11g
10g

Fig. 9

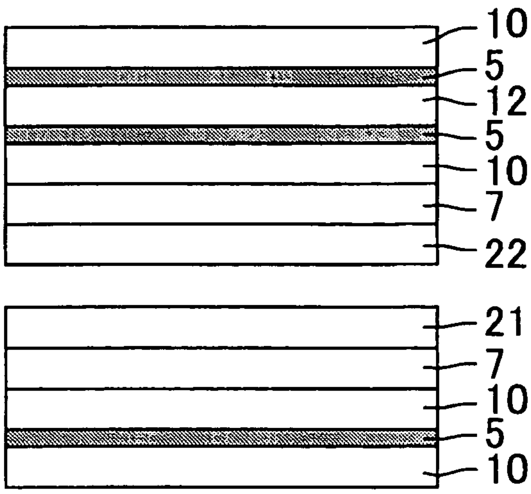
10
5
12
5
10
7
22
21
7
10
5
10

Fig. 10

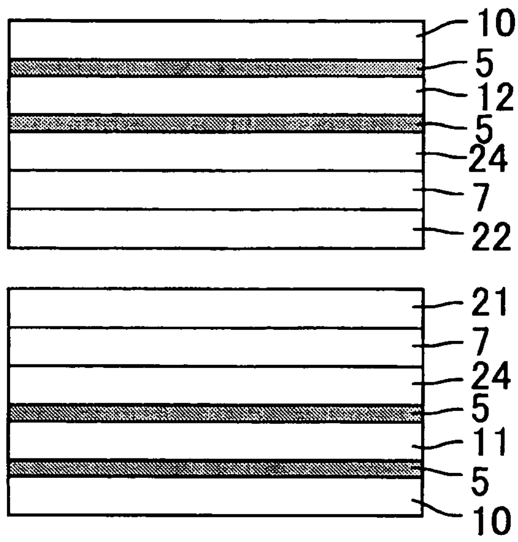


Fig. 11

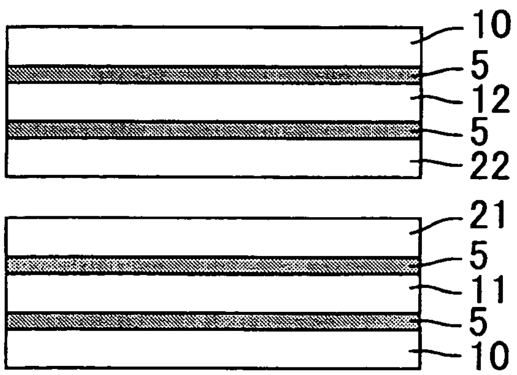


Fig. 12

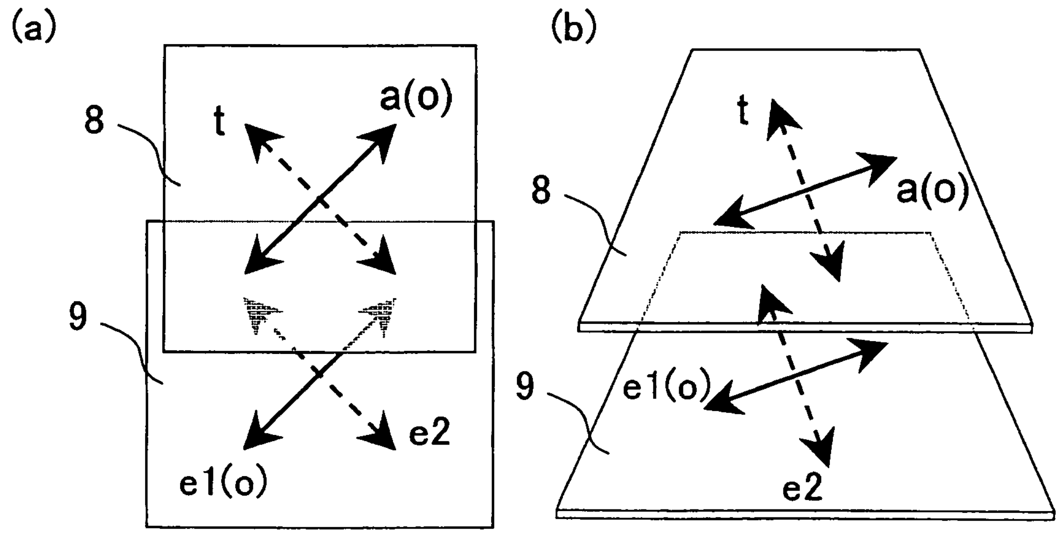

Fig. 13

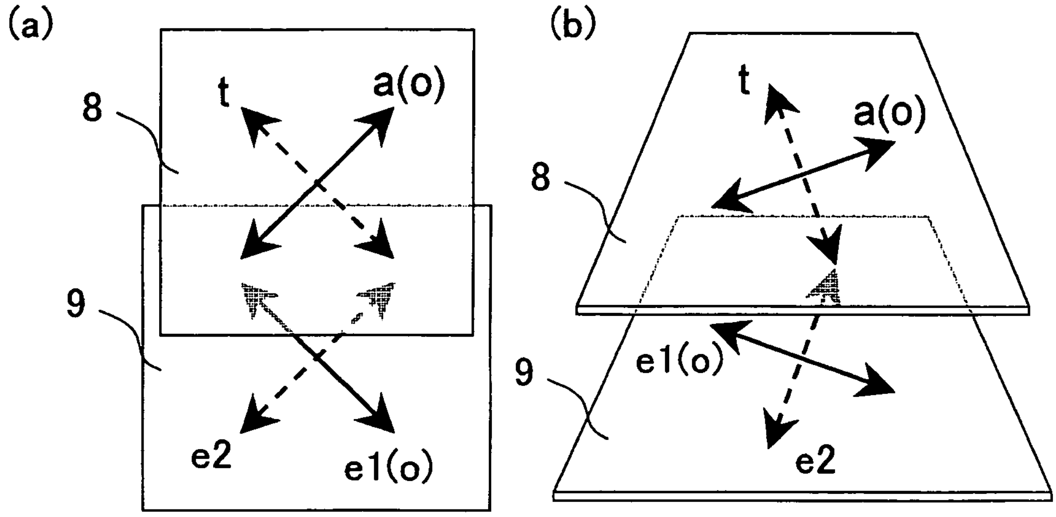
(a)
8
9
t
a(o)
e2
e1(o)
(b)
8
9
t
a(o)
e1(o)
e2

Fig. 14

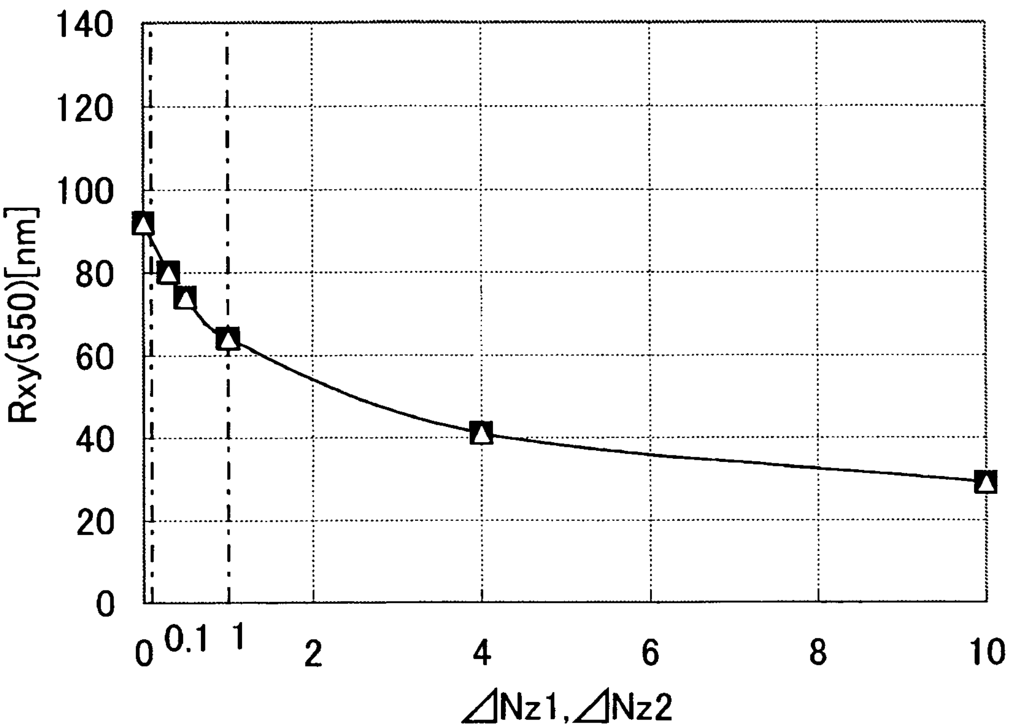
140
120
100
80
60
40
20
0
Rxy(550)[nm]
0
0.1
1
2
4
6
8
10
⊿Nz1,⊿Nz2

Fig. 15

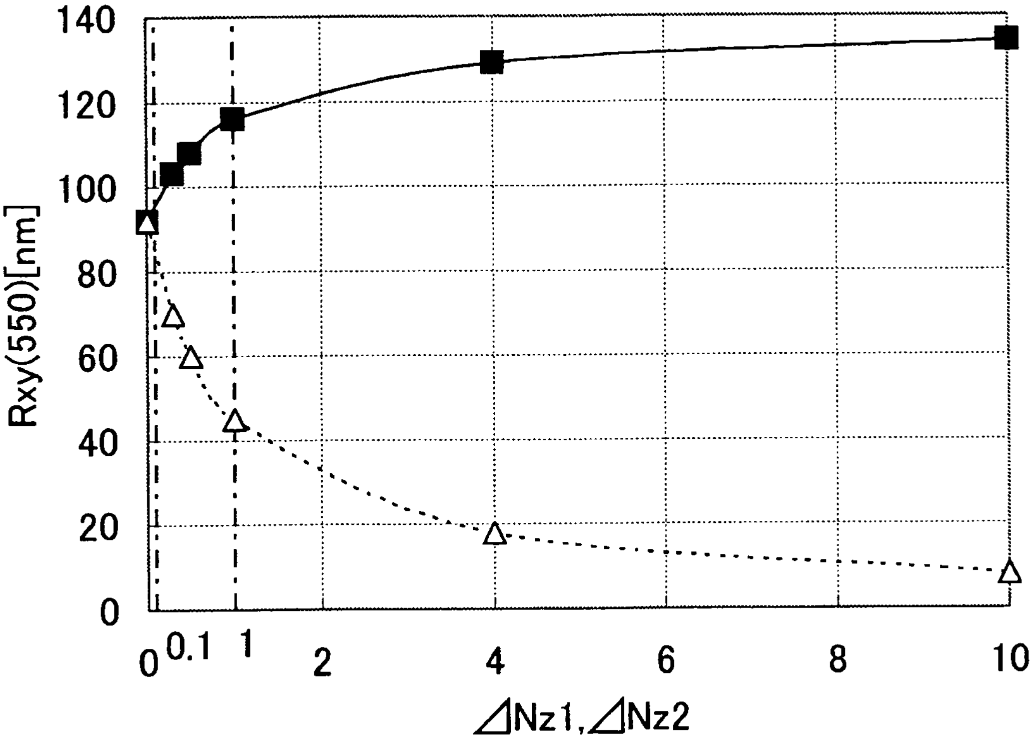
140
120
100
80
60
40
20
0
Rxy(550)[nm]
0
0.1
1
2
4
6
8
10
⊿Nz1,⊿Nz2

Fig. 16

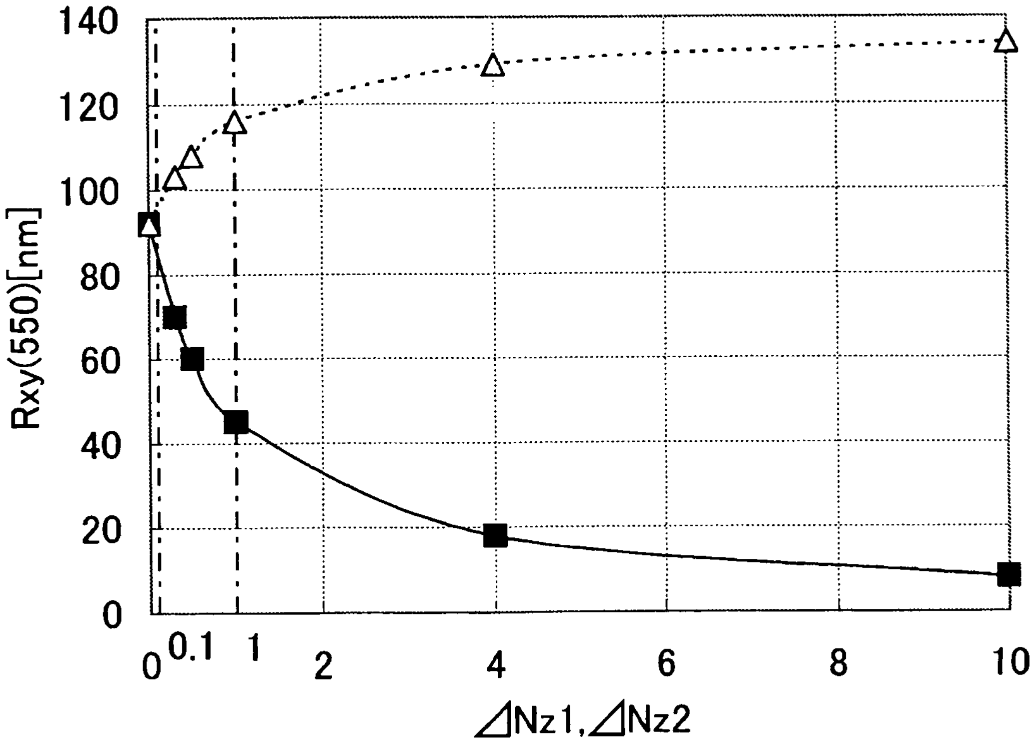
140
120
100
80
60
40
20
0
Rxy(550)[nm]
0
0.1
1
2
4
6
8
10
⊿Nz1,⊿Nz2

**INTERNATIONAL SEARCH REPORT**

International application No.
PCT/JP2008/069789

A. CLASSIFICATION OF SUBJECT MATTER
*G02F1/13363*(2006.01)i, *G02B5/30*(2006.01)i, *G02F1/1335*(2006.01)i

According to International Patent Classification (IPC) or to both national classification and IPC

B. FIELDS SEARCHED

Minimum documentation searched (classification system followed by classification symbols)
G02F1/13363, G02B5/30, G02F1/1335

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2005-326818 A (Sharp Corp.), 24 November, 2005 (24.11.05), Par. No. [0039]; Fig. 14 & US 2005/231660 A1 & KR 2006/46613 A & CN 1683972 A | 1-15 |
| A | WO 2006/118234 A1 (Nippon Zeon Co., Ltd.), 09 November, 2006 (09.11.06), Par. Nos. [0044] to [0046] & KR 2008/9271 A | 1-15 |
| A | JP 2005-309110 A (Sumitomo Chemical Co., Ltd.), 04 November, 2005 (04.11.05), Par. Nos. [0035] to [0037] & US 2005/185124 A1 & KR 2006/41671 A & CN 1651997 A | 1-15 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20 November, 2008 (20.11.08) | 02 December, 2008 (02.12.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6141075 A
- US 6661488 B
- US 7057689 B
- WO 06001448 A
- JP 2006514754 A
- JP 2001350022 A
- JP H11305217 B
- JP 2007232873 A
- JP 2007232874 A
- JP 2008027998 A


### Non-patent literature cited in the description


- **XiNzhu et al.** Super Wide View In-plane Switching LCD with Positive and Negative Uniaxial A-Films Compensation. *SID 05 DIGEST,* 1164-1167